# EUROPÄISCHE PATENTSCHRIFT

(11) **EP 3 314 806 B1**
(45) Veröffentlichungstag und Bekanntmachung des Hinweises auf die Patenterteilung: **05.08.2020**
(21) Anmeldenummer: 16731888.0
(22) Anmeldetag: 23.06.2016
(51) Int. Cl.: H04L 9/08, H04L 9/00

(54) **VERSCHLÜSSELUNGSFILTER**
ENCRYPTION FILTER
FILTRE DE CODAGE

(30) Priorität: 24.06.2015 EP 15173725
(43) Veröffentlichungstag der Anmeldung: 02.05.2018
(73) Patentinhaber: Medisite GmbH, 30625 Hannover (DE)
(72) Erfinder: FRANK, Torsten, 30539 Hannover (DE); GRZESIK, Alexander, 30625 Hannover (DE)
(74) Vertreter: Betten & Resch
(86) Internationale Anmeldenummer: PCT/EP2016/064546
(87) Internationale Veröffentlichungsnummer: WO 2016/207282

(56) Entgegenhaltungen:
- US-A1- 2013 042 106
- US-A1- 2013 219 176
- US-A1- 2014 366 155
- US-B1- 6 941 459
- RALUCA ADA POPA ET AL: "CryptDB", OPERATING SYSTEMS PRINCIPLES, ACM, 2 PENN PLAZA, SUITE 701 NEW YORK NY 10121-0701 USA, 23. Oktober 2011 (2011-10-23), Seiten 85-100, XP058005747, DOI: 10.1145/2043556.2043566 ISBN: 978-1-4503-0977-6

## Beschreibung

Die Erfindung betrifft ein Verfahren und eine Vorrichtung zur verschlüsselten Kommunikation zwischen einem Client und einem Server, wobei die Kommunikation Anfragenachrichten jeweils mit Anfrageelementen und Antwortnachrichten jeweils mit Antwortelementen umfasst. Anfrageelemente und Antwortelemente können Daten umfassen.

### Stand der Technik

Verfahren und Vorrichtungen zur verschlüsselten Kommunikation zwischen einem Client und einem Server sind aus dem Stand der Technik bekannt.

Das Thema Datenschutz und Datensicherheit durch Verschlüsselung ist schon lange bekannt. Es gibt unterschiedlichste Verschlüsselungsverfahren und Konzepte der Nutzung jener zum Schützen von Daten.

Die Webservice- und XML-Spezifikationen sehen eine Nachrichtenverschlüsselung oder die Kommunikation über sichere Verbindungsprotokolle wie SSL/TLS zur Verschlüsselung auf der Transportebene vor. REST selbst definiert keine Verschlüsselungsmethoden und verlässt sich in der Regel auf Verfahren der Nachrichtenverschlüsselung. Diese dient ausschließlich dazu, den Kommunikationsweg zwischen Client und Server zu schützen. Die Daten selbst werden auf Serverseite wieder entschlüsselt und sind damit dort lesbar. Man spricht in diesem Zusammenhang auch von Punkt zu Punkt Verschlüsselung der Kommunikation. Ein Angreifer oder Administrator hat damit potenziell Zugriff auf ungeschützte Informationen auf dem Server.

Zu bekannten Verfahren im Bereich der Verschlüsselung von strukturierten Daten zählen zum Beispiel XML Encryption, welches unter http://www.w3.org/TR/xmlenccore/ beschrieben ist, und JSON Web Encryption, welches unter https://tools.ietf.org/html/draft-ietf-jose-json-web-encryption-39 beschrieben ist, jeweils zur Verschlüsselung von Daten im XML und JSON Format. Auch diese Verfahren werden in der Regel für die Verschlüsselung von Nachrichten beim Austausch zwischen Client und Serverkomponenten genutzt oder um ganze Dokumente oder Teile davon zu verschlüsseln. Die Verschlüsselung ändert die Struktur der Daten allerdings, indem sie zusätzliche Tags oder Attribute einfügt, was bei der Nutzung der Daten auf Systemen, die nicht zur Handhabung und Verarbeitung verschlüsselter Daten eingerichtet sind, problematisch ist. Die Verschlüsselung ist somit nicht transparent für die Anwendungen und Dienste, die diese Daten verarbeiten. Je nach aufgerufenem Dienst kann dieser, wenn er nicht auf die Verarbeitung verschlüsselter Daten eingerichtet ist, die Nachricht, welche aufgrund der Verschlüsselung in Ihrer Struktur gegenüber der unverschlüsselten Nachricht verändert ist, als ungültig einstufen, weil unbekannte Tags oder Attribute vorhanden sind. Weiterhin kann durch diese Verfahren der aufgerufene Dienst einen Hinweis auf die Verschlüsselung erhalten, was unter Umständen auch nicht gewünscht ist. Um verschlüsselte Daten wieder zu entschlüsseln muss der Schlüssel bekannt sein, zum Beispiel auf Client-Seite.

In DE102011118804A1 "Persistente Verschlüsselung mit XML Encryption" wird ein Verfahren beschrieben, wie die Verschlüsselung mit XML Encryption erfolgt und die Schlüsselinformationen zu einem XML Dokument hinzugefügt werden. Auch hier wird die Struktur des Dokumentes geändert und zusätzliche Informationen übertragen, die einem potenziellen Angreifer Kenntnis vom Bestehen und der Art der Verschlüsselung, und somit einen Vorteil verschaffen könnten.

US 2013/042106 A1 (PERSAUD ANDREW [US] ET AL, 2013-02-14) lehrt Techniken zur sicheren Speicherung von Datendateien in oder zum Abrufen von Datendateien aus der Cloud. Eine Datendatei, die von einem Client in einer Enterprise-Computing-Umgebung an einen Cloud-Speicher übertragen wird, wird von mindestens einem Netzwerkgerät empfangen. Unter Verwendung von Sicherheitsinformationen, die von einem Management Server empfangen werden, wird die Datei in ein verschlüsseltes Objekt umgewandelt, dazu konfiguriert, im Ruhezustand im Cloud-Speicher verschlüsselt zu bleiben.

In US6941459 "Selective data encryption using style sheet processing for decryption by a key recovery agent" wird ein Verfahren beschrieben, wie XML Dokumente per Stylesheet Verarbeitung verschlüsselt werden. Die Verschlüsselung gemäß dem Verfahren erfolgt transparent für die Gegenstelle anhand einer vorgegeben Konfiguration, engl. Policy. Allerdings bezieht sich das Verfahren auf den Datenabruf in XML Form. Ein Nutzer ruft Daten aus einem System ab und erhält ein teilweise verschlüsseltes Dokument, das nur dieser Nutzer entsprechend entschlüsseln kann. Bei jedem Abruf eines Dokumentes wird die Konfiguration geprüft und anhand der für den Nutzer definierten Regeln verschlüsselt. Die Daten liegen gemäß diesem Verfahren im Quellsystem unverschlüsselt vor.

Ferner sind Technologien und Konzepte bekannt, um Daten verschlüsselt in einer Cloud anzulegen. Zum Beispiel ermöglicht eCryptFS, welches unter https://launchpad.net/ecryptfs beschrieben ist, die Verschlüsselung von Dateien und Laufwerken die in der Cloud gespeichert werden. Auch PGP, welches unter http://www.pgpi.org/ beschrieben ist, bietet ähnliche Möglichkeiten zur Verschlüsselung von Dateien und Nachrichten. Diese Technologien und Werkzeuge erfordern allerdings, dass die Quelle der Daten, sprich der Client, speziell dazu eingerichtet ist, die Daten zu verschlüsseln und die Schlüssel zu verwalten. Diese Technologien lassen sich jedoch nicht, oder zumindest nicht ohne zusätzlichen Aufwand und Anpassungen, zur Verschlüsselung der Kommunikation von allgemeinen Web-basierten Anwendungen einsetzen.

US20140122866 beschreibt die transparente Verschlüsselung von Dateien mit Hilfe eines Proxy. Diese Technologie hat den Nachteil, dass nur ganze Dateien verschlüsselt werden und somit eine teilweise unverschlüsselte Verarbeitung in der Cloud nicht möglich ist. Das Verfahren ist auf den Einsatz von Verschlüsselung und Speicherung von Dateien in einer Cloud gerichtet, nicht auf die Verwendung für allgemeine Web-basierte Anwendungen bzw. Webservices, die zum Beispiel nach dem REST-Schema kommunizieren.

Es gibt außerdem eine Vielzahl von Algorithmen, um Daten zu verschlüsseln. Diese Algorithmen unterscheiden sich in den Bereichen Sicherheit, Verarbeitungsgeschwindigkeit und der Möglichkeit, Operationen auf verschlüsselten Daten auszuführen, die gleichsam auf die entschlüsselte Form der Daten wirken, wie zum Beispiel im Fall homomorpher Verschlüsselung. Der RSA Algorithmus erlaubt beispielsweise, verschlüsselte Zahlen zu multiplizieren. Ein weiteres Beispiel ist das Paillier-Kryptosystem, welches additiv-homomorph ist, wodurch durch Operationen auf Schlüsseltexte unbekannte Klartexte addiert werden können. Die Möglichkeiten homomorpher Verschlüsselung werden zum Beispiel von Paillier in "Public-Key Cryptosystems Based on Composite Degree Residuosity Classes", Eurocrypt 99, Springer Verlag, 1999, S. 223-238 beschrieben. Die meisten Algorithmen sind dabei teil-homomorph, unterstützen also nur entweder multiplikative oder additive Operationen.

Mit dem von Gentry in "A fully homomorphic encryption scheme" Stanford Crypto Group, 1. August 2009, S. 169-178 vorgeschlagenen Verschlüsselungssystem ist eine voll-homomorphe Verschlüsselung möglich. Ein Nachteil der derzeit bekannten vollhomomorphen Algorithmen ist jedoch, dass sie sehr rechenintensiv sind und die Ausführungszeiten von Operation um den Faktor 10¹¹ oder 10¹² verlängert und somit deren Anwendbarkeit auf Daten von geringen Umfang bzw. einzelne Elemente einer zu kommunizierenden Nachricht beschränkt ist.

Das CryptDB System, welches von Raluca at al.: "CryptDB: Protecting Confidentiality with Encrypted Query Processing" in Proceedings of the 23rd ACM Symposium on Operating Systems Principles (SOSP), Cascais, Portugal, October 2011 beschrieben wird, ist ein System zur Verschlüsselung von relationalen Datenbanken, das verschiedene Verschlüsselungsalgorithmen kombiniert um SQL Operationen verschlüsselt durchführen zu können. Durch die Kombination verschiedener Algorithmen ist das vorgeschlagene System weniger rechenintensiv als bekannte voll-homomorphe Algorithmen, wobei die Ausführungszeiten um lediglich 30-50% verlängert gegenüber Operationen ohne Verschlüsselung werden. Das System ist speziell auf relationale Datenbanken zugeschnitten und nicht für andere Datenbanktechnologien geeignet. Je nachdem, welche Operationen auf den Daten vorgesehen werden sollen, kann die Verschlüsselungsstärke insgesamt geringer werden, da die eingesetzten Verschlüsselungen nicht beliebig gewählt werden können und somit insgesamt weniger sicher sind. So können nicht alle Operationen zuverlässig auf allen verschlüsselten Daten erfolgen, wobei Raluca 99.5% zuverlässig ausgeführte Operationen in einem geprüften Beispiel angibt.

Somit adressiert keines der genannten Verfahren die Anforderungen, die der sichere Datenaustausch und die sichere Speicherung von Daten in einer verteilten IT Infrastruktur unter Einbeziehung von Cloud-Ressourcen stellt. Die hier beschriebene Erfindung bringt auf innovative Weise verschiedene Konzepte zusammen und beschreibt eine transparente Datenverschlüsselung für die Maschine-Maschine Kommunikation bespielhaft auf Basis der REST Technologie, ist jedoch nicht auf diese spezielle Technologie beschränkt und auch auf andere Formen der Kommunikation, Speicherung und Verarbeitung strukturierter Daten anwendbar. Vorteilhafte Eigenschaften des REST Schemas, welche es geeignet zur Verwendung und Beschreibung der die vorliegenden Erfindung machen, sind die klare und einfache Struktur des REST Paradigmas, das strukturierte ressourcenbasierte Modell und die Zustandslosigkeit der Anfragen ermöglichen den Einsatz eines Verschlüsselungsfilters für die transparente Verschlüsselung der Daten, die dann verschlüsselt auf Serverseite gespeichert und verarbeitet werden. Durch den Fokus auf atomare Operationen ist eine solche Verschlüsselung für REST Anfragen einfach zu realisieren.

Die Aufgabe der Erfindung ist es, unbefugten Zugriff auf Daten bei der Kommunikation zwischen Client und Server und auch bei der Speicherung und Verarbeitung auf dem Server zu erschweren oder zu verhindern. Hierbei wird davon ausgegangen, dass der Kommunikationskanal und auch der Server selbst nicht vertrauenswürdig sind und weder Client noch Server Maßnahmen bereitstellen oder anpassbar sind, um den genannten Risiken des unbefugten Zugriffs, zum Beispiel durch kryptographische Verfahren, entgegenzuwirken.

### Kurzfassung der Erfindung

Die Aufgabe wird anhand der unabhängigen Ansprüche 1, 7 und 10 gelöst.

Erfindungsgemäß wird diese Aufgabe bei einem gattungsgemäßen Verfahren zur verschlüsselten Kommunikation zwischen einem Client und einem Server, wobei die Kommunikation eine erste und zweite Anfragenachricht, die jeweils ein oder mehrere Anfrageelemente beinhalten, und eine erste und zweite Antwortnachricht, die jeweils ein oder mehrere Antwortelemente beinhalten, umfasst, dadurch gelöst, dass das Verfahren die folgenden Schritte umfasst: Empfangen einer ersten Anfragenachricht von dem Client; Zergliedern der ersten Anfragenachricht in Anfrageelemente; für mindestens ein Anfrageelement der ersten Anfragenachricht, Bestimmen ob das Anfrageelement verschlüsselt werden soll basierend auf einer vorbestimmten Konfiguration; für jedes Anfrageelement, das verschlüsselt werden soll, Bestimmen von Schlüsselinformation zur Verschlüsselung basierend auf der vorbestimmten Konfiguration, Verschlüsseln des Anfrageelements in ein verschlüsseltes Anfrageelement basierend auf der Schlüsselinformation zur Verschlüsselung, Aktualisieren und Speichern der Verschlüsselungsinformation in einem Schlüsselmanifest; Zusammensetzen einer zweiten Anfragenachricht aus den Anfrageelementen der ersten Anfragenachricht, wobei jedes Anfrageelement, das verschlüsselt werden soll, durch das entsprechende verschlüsselte Anfrageelement ersetzt wird; Senden der zweiten Anfragenachricht an den Server; Empfangen einer ersten Antwortnachricht von dem Server; Zergliedern der ersten Antwortnachricht in Antwortelemente; für jedes Antwortelernent der ersten Antwortnachricht, Bestimmen ob das Antwortelement entschlüsselt werden muss basierend auf der vorbestimmten Konfiguration; für jedes Antwortelement, das entschlüsselt werden muss, Bestimmen von Schlüsselinformation zum Entschlüsseln aus dem Schlüsselmanifest, Entschlüsseln des Antwortelements basierend auf der Schlüsselinformation zum Entschlüsseln; Zusammensetzen einer zweiten Antwortnachricht aus den Antwortelementen der ersten Antwortnachricht, wobei jedes Antwortelement, das entschlüsselt werden muss, durch das entsprechende entschlüsselte Antwortelement ersetzt wird; Senden der zweiten Antwortnachricht an den Client.

Somit erlaubt das erfindungsgemäße Verfahren auf Seiten des Clients das Versenden einer Anfragenachricht mit unverschlüsselten Anfrageelementen und das Empfangen einer, in der Kommunikation zugehörigen, Antwortnachricht mit unverschlüsselten Anfrageelementen, und auf Seiten des Servers das Empfangen einer entsprechenden Anfragenachricht mit verschlüsselten Anfrageelementen und das Senden einer entsprechenden Antwortnachricht mit verschlüsselten Antwortelementen.

Das erfindungsgemäße Verfahren ermöglicht somit, dass die Schritte der Verschlüsselung und der Entschlüsselung nicht auf dem Server und auch nicht auf dem Client ausgeführt werden.

Das erfindungsgemäße Verfahren ermöglicht somit, die Komplexität des Clients und auch die Komplexität des Servers gering zu halten bzw. gegenüber herkömmlichen Sicherheitsarchitekturen, die kryptographische Verfahren auf dem Server und/oder dem Client vorsehen, zu reduzieren.

Das erfindungsgemäße Verfahren ermöglicht ferner, dass Verschlüsselung nur auf Teile einer Anfragenachricht bzw. Entschlüsselung nur auf Teile einer Antwortnachricht angewendet wird, so dass es, insbesondere bei aufwendigen Verschlüsselungsverfahren, wie z. B. homomorpher Verschlüsselung, insgesamt zu einer effizienteren Arbeitsweise der Verschlüsselung und Entschlüsselung der Kommunikation kommt. Eine Effizienzsteigerung in der Verarbeitung kann auch in der Auswahl bestimmter unterschiedlicher kryptographischer Verfahren, umfassend Verschlüsselung und Entschlüsselung) für unterschiedliche Anfrageelemente oder Antwortelemente sein, wenn zum Beispiel unterschiedliche Anforderungen an die Verarbeitung und den Schutz einzelnen Anfrageelemente oder Antwortelemente gestellt werden und die unterschiedlichen kryptographischen Verfahren unterschiedlich hohen Rechenaufwand in der Verarbeitung erfordern.

Das erfindungsgemäße Verfahren hat auch zur Folge, dass weder auf Seiten des Clients noch auf Seiten des Servers Schlüsselinformation oder ein Schlüsselmanifest gespeichert werden müssen, so dass eine Sicherheitsarchitektur vorliegt, die eine erhöhte Sicherheit gewährleistet, zum Beispiel in dem Fall, dass Client und/oder Server Gegenstand eines Datenverlusts oder Opfer eines unbefugten Datenzugriffs werden.

Das erfindungsgemäße Verfahren hat den weiteren Vorteil, dass bestimmte Anfrageelemente, zum Beispiel solche Anfrageelemente, die sensible zu schützende Daten enthalten, dem Server nur in verschlüsselter Form zugeführt und auch ausschließlich in dieser verschlüsselten Form auf dem Server verarbeitet oder gespeichert werden können.

Beispielsweise könnte bei dem Verfahren die vorbestimmte Konfiguration nur solche Anfrageelemente der ersten Anfragenachricht zur Verschlüsselung vorsehen, die keinen Einfluss auf die Funktionalität der Anfrage auf dem Server haben.

Dies hat den Vorteil und technischen Effekt, dass auf dem Server keine Anpassungen in Bezug auf die Verarbeitung verschlüsselter Daten an Stelle von unverschlüsselten Daten durchgeführt werden müssen, der Server somit gleichsam geeignet ist, verschlüsselte wie unverschlüsselte Daten zu verarbeiten, ohne dass eine Entschlüsselung der verschlüsselten Daten auf dem Server erforderlich wäre.

Erforderlich ist hierzu lediglich, dass die Anfrage derart strukturiert ist bzw. einer vorgegebenen Struktur folgt, so dass ein Zergliedern der Anfrage in Anfrageelemente möglich ist, wobei im Rahmen des Zergliederns in Anfrageelemente diejenigen Anfrageelemente, für die eine Verschlüsselung erforderlich ist, von denen unterschieden werden können, für die keine Verschlüsselung erforderlich ist. Derartig strukturierte Anfragen könne auf ganz unterschiedliche Art und Weise aufgebaut sein und auf ganz unterschiedliche Funktionen eines Servers zugreifen, wie nachfolgend noch genauer beschrieben wird. Beispielsweise kann es sich bei der strukturierten Anfrage um eine REST-Anfrage handeln, bei der die Attribute zu verschlüsseln sind, es kann sich aber auch um eine SQL-Anfrage handeln, bei der die Parameter der Anfrage (im Gegensatz zu den SQL-Befehlen selbst) verschlüsselt werden sollen, um beispielsweise die privaten Daten der SQL-Query vor unbefugten zu schützen.

Zweckmäßigerweise umfassen bei dem Verfahren die Schlüsselinformation Angaben zu Verschlüsselungsart, Verschlüsselungsalgorithmus, und Schlüsselname oder - Schlüsselnamensmuster. Hierbei schließen die Begriffe Verschlüsselungsart und Verschlüsselungsalgorithmus auch jeweils korrespondierende zur Entschlüsselung notwendige Schlüsselart und Entschlüsselungsalgorithmus mit ein.

Dies hat den Vorteil und den technischen Effekt, dass für unterschiedliche Anfrageelemente bzw. Antwortelemente unterschiedliche Verschlüsselungsarten und Verschlüsselungsalgorithmen verwendet werden.

Ferner kann bei dem Verfahren das Bestimmen von Schlüsselinformation zum Verschlüsseln und Entschlüsseln von dem jeweiligen zu verschlüsselnden bzw. zu entschlüsselnden Anfrageelement einer Anfragenachricht bzw. Antwortelement einer Antwortnachricht abhängen.

Dies hat den Vorteil und technischen Effekt, dass die Schlüsselinformation vom Wert eines Anfrageelements oder Antwortelements abhängen kann und somit unterschiedliche Verschlüsselungsarten und Verschlüsselungsalgorithmen je nach Wert eines Anfrageelements oder Antwortelements angewendet werden.

Ferner kann bei dem Verfahren die Kommunikation zwischen dem Client und dem Server dem Representational State Transfer (REST) Schema folgen und jede Anfragenachricht und Antwortnachricht einer Ressource zugeordnet werden.

Dies hat den Vorteil und technischen Effekt, dass das Verfahren für eine Vielzahl von Client-Server Anwendungen verwendbar ist, die auf dem REST Schema basieren. Der Einsatz des Verfahrens zur verschlüsselten Kommunikation erfordert hierbei keine Anpassung der Anwendung in Bezug auf die Verschlüsselung, insbesondere keine Veränderung bereits existierender Client- oder Server Module der Anwendung.

Beim Einsatz der Verfahrens in Zusammenhang mit Kommunikation, die dem REST Schema folgt, kann die Verschlüsselungsinformation und entsprechende Entschlüsselungsinformation unterschiedlich für unterschiedliche Ressourcen sein und für jede Ressource ein korrespondierendes Schlüsselmanifest verwaltet werden.

Dies hat den Vorteil und technischen Effekt, dass der Zugriff, umfassend Anfrage und korrespondierende Antwort, auf unterschiedliche Ressourcen im Sinne des REST Schemas, je nach Ressource mit unterschiedlichem Schlüssel, Verschlüsselungsart, und Verschlüsselungsalgorithmus erfolgen kann. Dies erhöht die Sicherheit, da zum Beispiel unterschiedliche Schlüssel für unterschiedliche Ressourcen verwendet werden können. Ferner wird ermöglicht, die mit einer Ressource verbundenen Daten, die zum Beispiel einer bestimmten Person zugeordnet sein können, individuell für jede Ressource mit einem eigenen Schlüssel zu schützen und somit den Datenschutz zu verbessern und Privatheit der Daten zu implementieren.

Beim Einsatz des Verfahrens in Zusammenhang mit Kommunikation, die dem REST Schema folgt, kann beispielsweise ein Schlüsselmanifest erzeugt werden, wenn in Folge einer Anfragenachricht eine neue Ressource erstellt wird.

Dies ermöglicht die Zuordnung unterschiedlicher Schlüssel zu unterschiedlichen Ressourcen um Sinne des REST Schemas.

Erfindungsgemäß ist ebenso eine Vorrichtung zur verschlüsselten Kommunikation zwischen einem Client und einem Server, wobei die Vorrichtung zwischen dem Client und dem Server angeordnet ist, wobei die Kommunikation eine erste und zweite Anfragenachricht, die jeweils ein oder mehrere Anfrageelemente beinhalten, und eine erste und zweite Antwortnachricht, die jeweils ein oder mehrere Antwortelemente beinhalten, umfasst, umfassend: Mittel zum Empfangen einer ersten Anfragenachricht von dem Client; Mittel zum Zergliedern der ersten Anfragenachricht in Anfrageelemente; Mittel zum Bestimmen, für mindestens ein Anfrageelement der ersten Anfragenachricht, ob das Anfrageelement verschlüsselt werden soll basierend auf einer vorbestimmten Konfiguration; Mittel zum Bestimmen, für jedes Anfrageelement das verschlüsselt werden soll, von Schlüsselinformation zur Verschlüsselung basierend auf der vorbestimmten Konfiguration, und zum Verschlüsseln des Anfrageelements in ein verschlüsseltes Anfrageelement basierend auf der Schlüsselinformation zur Verschlüsselung, und zum Aktualisieren und zum Speichern der Verschlüsselungsinformation in einem Schlüsselmanifest; Mittel zum Zusammensetzen einer zweiten Anfragenachricht aus den Anfrageelementen der ersten Anfragenachricht, wobei jedes Anfrageelement, das verschlüsselt werden soll, durch das entsprechende verschlüsselte Anfrageelement ersetzt wird; Mittel zum Senden der zweiten Anfragenachricht an den Server; Mittel zum Empfangen einer ersten Antwortnachricht von dem Server; Mittel zum Zergliedern der ersten Antwortnachricht in Antwortelemente; Mittel zum Bestimmen, für jedes Antwortelement der ersten Antwortnachricht, ob das Antwortelement entschlüsselt werden muss basierend auf der vorbestimmten Konfiguration; Mittel zum Bestimmen, für jedes Antwortelement das entschlüsselt werden muss, von Schlüsselinformation zum Entschlüsseln aus dem Schlüsselmanifest, und zum Entschlüsseln des Antwortelements basierend auf der Schlüsselinformation zum Entschlüsseln; Mittel zum Zusammensetzen einer zweiten Antwortnachricht aus den Antwortelementen der ersten Antwortnachricht, wobei jedes Antwortelement, das entschlüsselt werden muss, durch das entsprechende entschlüsselte Antwortelement ersetzt wird; und Mittel zum Senden der zweiten Antwortnachricht an den Client.

Die Vorrichtung ist ferner dazu eingerichtet, die Schritte des Verfahrens zur verschlüsselten Kommunikation zwischen einem Client und einem Server wie zuvor beschrieben auszuführen.

Die technischen Effekte und Vorteile der Vorrichtung entsprechen denjenigen, die zuvor in Bezug auf das erfindungsgemäße Verfahren und seinen beispielhaften Ausführungsvarianten genannt wurden.

Zweckmäßigerweise ist die Vorrichtung zur Verschlüsselung von Kommunikation wie beschrieben als Proxy ausgelegt, wobei sämtliche Kommunikation zwischen dem Client und dem Server über den Proxy stattfindet, und wobei der Proxy mit dem Client in einem sicheren Netzwerk verbunden ist.

Dies hat den technischen Effekt und Vorteil, dass der Aspekt der Verschlüsselung transparent für den Client und den Server ist. Dies bedeutet, dass weder Client noch Server besondere Funktionalität oder Berücksichtigung des Umstands bedürfen, dass der Kommunikation nicht direkt und unverschlüsselt zwischen Client und Server, sondern indirekt, über den Proxy, und damit verschlüsselt zwischen dem Proxy und dem Server erfolgt. An diesem Grundsatz bzw. Vorteil ändert auch eine möglicherweise notwendige einfache Parametrisierung der Netzwerkkonfiguration des Clients, wie bei der Verwendung eines Proxys üblich, nichts. Unter der Maßgabe, dass die Verbindung zwischen Proxy und Client in einem sicheren Netzwerk erfolgt, ist ferner zugesichert, dass die Kommunikation und die Übertragung von Daten bzw. einzelner Anfrageelemente und Antwortelemente über ein ungesichertes Netzwerk zwischen dem Proxy und dem Server Kommunikation ausschließlich in verschlüsselter Form erfolgt. Somit erfolgt insgesamt außerhalb des sicheren Netzwerks keinerlei Verarbeitung auf dem Server, Speicherung auf dem Server oder Übertragung, in Form von Anfrageelementen und Antwortelementen, von sensiblen, zu verschlüsselnden Daten, in unverschlüsselter Form.

Erfindungsgemäß ist ebenso ein Computerprogramm aufweisend Computerprogrammcode, der wenn er auf einem Computer ausgeführt wird, diesen in die Lage versetzt, ein erfindungsgemäßes Verfahren auszuführen.

Bevorzugte Ausführungsformen des erfindungsgemäßen Verfahrens und der erfindungsgemäßen Vorrichtung werden anhand der Figuren erläutert. Es zeigt
Figur 1 ein Aktivitätsdiagramm zum Ablauf des Verfahrens zur verschlüsselten Kommunikation zwischen einem Client und einem Server;
Figur 2 ein Komponentendiagramm einer ersten Anordnung und Nutzung des Verschlüsselungsfilters;
Fig. 3 ein Komponentendiagramm einer zweiten Variante der Nutzung eines Proxyfür die Verschlüsselung
Figur 4 ein Komponentendiagramm, das Komponenten zur Steuerung und Durchführung der Verschlüsselung, und zur Verwaltung und Erzeugung von Schlüsselinformation und Schlüsseln und deren Zusammenwirken darstellt;
Figur 5 ein Ablaufdiagramm, das eine Aufrufsequenz und Interaktion zwischen den Verschlüsselungskomponenten am Beispiel einer Verschlüsselung darstellt;
Figur 6 ein Szenario zum Einsatz eines Verschlüsselungsfilters für einen REST-basierten Datenbankdienst, der durch Server in einer Cloud bereitgestellt wird.

### Detaillierte Beschreibung

Beim Cloud Computing im Rahmen einer Public Cloud werden IT-Ressourcen außerhalb der eigenen Infrastruktur genutzt. Diese Ressourcen teilen sich verschiedene Anwender, so dass sich Potentiale zum Missbrauch von Daten ergeben. Ein weiteres Problem ist der Informationsverlust über den Datenstandort, sprich der physische geographische Ort an dem die Daten gespeichert sind, sowie der Kontrollverlust über notwendige Sicherheitsmaßnahmen. Im Gegensatz dazu können in einer abgeschlossenen IT-Infrastruktur eines Unternehmens Sicherheitsmechanismen durch das Unternehmen selbst umgesetzt werden, um sich gegen Missbrauch von Daten und Angriffe zu schützen und Missbrauch von Daten z.B. durch eigene Mitarbeiter, zu erschweren. Im Vergleich zum klassischen IT-Outsourcing werden bei Cloud Computing Daten über weltweit verteilte Systeme transferiert, gespeichert und kopiert. Den Vorteilen wie z.B. kostengünstige Betriebsmodelle durch Skalierbarkeit steht ein erhöhtes Sicherheitsrisiko gegenüber. Der Anbieter ist nicht mehr in der Lage, jederzeit über Zustand und Aufenthaltsort der Daten Auskunft geben zu können. Daten können somit beim Cloud Computing leichter manipuliert werden oder in falsche Hände geraten.

Dabei sind die Vorteile und Chancen von Cloud Computing und die damit verbundenen positiven Auswirkungen überzeugend. Gleichzeitig muss gewährleistet sein, dass die in der Cloud-Infrastruktur abgelegten Daten zu jedem Zeitpunkt sicher vor unbefugten Zugriffen sind. Dies gilt auch für die Verarbeitung der Daten. Das Speichern von sensitiven Daten, z.B. personenbezogene Daten, wie Adressen, Versicherungsdaten, Kreditkartennummern und Gesundheitsdaten in einer Cloud-Infrastruktur erfordert besondere Anforderungen an die Datensicherheit.

Ein weiteres Problem in diesem Zusammenhang ist, dass meist keine revisionssichere Nachprüfbarkeit der Datenhaltung zu den physischen Komponenten der Cloud-Infrastruktur gibt. Gerade in Bereichen, in denen sensitive Daten, zum Beispiel aus rechtlichen Gründen, nicht außerhalb von Landesgrenzen gespeichert werden dürfen, stößt Cloud Computing an seine Grenzen.

Daten in der Cloud müssen vertraulich sein. Die Verschlüsselung von Daten ist dabei ein wichtiger Bereich. Allerdings müssen diese Daten zur sinnvollen Verarbeitung und Anzeige unverschlüsselt vorliegen, bzw. beim Abruf auf Clientseite entschlüsselt werden.

Moderne Cloud-Dienste stellen für den Zugriff auf die Funktionen häufig REST Schnittstellen bereit. Diese Art der Schnittstellendefinition findet im World Wide Web und in modernen Softwarearchitekturen immer mehr Verbreitung. Die Kommunikation innerhalb einer verteilten Anwendung oder die Einbindung von Cloud-Diensten in die eigene Applikation, erfolgt dann häufig gemäß dem REST Schema. REST selbst definiert keine Verschlüsselungsverfahren. Zur Absicherung von REST Aufrufen wird in der Regel eine Nachrichtenverschlüsselung angewandt. Dies hat den Nachteil, dass die Daten nach dem Transport auf der Serverseite trotzdem wieder unverschlüsselt vorliegen. Bei der Nutzung von Cloud-Diensten kann dies ein Problem darstellen, da damit der Anbieter eines Dienstes bzw. ein Administrator potenziell Zugriff auf die unverschlüsselten Daten bekommen können. Auf der anderen Seite hat die Nutzung von Cloud-Diensten und die Datenspeicherung innerhalb der Cloud viele Vorteile gegenüber eine lokalen Datenspeicherung.

Es existiert eine Vielzahl von Cloud-Diensten und Anwendungen, die ein Unternehmen nutzen kann. Es ist wünschenswert, dass diese Dienste keine Kenntnis von den sensitiven Daten bekommen bzw. überhaupt Kenntnis darüber erlangen, ob verschlüsselte oder unverschlüsselte Daten verarbeitet werden. Daher ist es notwendig, dass die Verschlüsselung transparent erfolgt, ohne dass die Serverkomponente angepasst werden muss, bzw. wissen muss, dass verschlüsselte Daten verarbeitet werden.

Zudem sind diese Dienste oft außerhalb der Kontrolle des Unternehmens und werden in die eigenen Anwendungen und Infrastrukturen über eine RPC Schnittstelle, auch API bzw Application Programming Interface, integriert. Dafür werden oft REST konforme Webschnittstellen bereitgestellt. REST hat sich in den letzten Jahren immer stärker zum prägenden Standard in diesem Bereich entwickelt und löst SOAP als Schnittstelle zur Maschine-Maschine Kommunikation ab. Das REST Schema kann hierbei Aufrufe in verschiedenen Formaten wie XML oder JSON unterstützen.

Das im Folgenden beschriebene Verfahren dient dazu lokale Anwendung und Dienste innerhalb einer sicheren Umgebung die Anbindung von Cloud-Diensten und Ressourcen über eine REST API zu ermöglichen. Dabei werden Verschlüsselungsverfahren genutzt, um die Daten vor dem unberechtigten Zugriff zu schützen. Die Einbindung der Verschlüsselungsverfahren erfolgt dabei transparent für die Anwendung und ist flexibel für eine Vielzahl von Szenarien anpassbar. Die Schlüssel zum Verschlüsseln und Entschlüsseln der Daten verbleiben dabei immer in der Hoheit des Nutzers bzw. der verantwortlichen Organisation.

Im Folgenden werden zunächst relevante Technologien erläutert und hierbei verwendete technische Begriffe definiert.

Der Begriff "Representational State Transfer", abgekürzt REST, bezeichnet ein Programmierparadigma bzw. Architekturschema für Webanwendungen, das zum Beispiel unter http://de.wikipedia.org/wiki/Representational_State_Transfer beschrieben ist. REST ist eine Abstraktion der Struktur und des Verhaltens des World Wide Web. REST fordert, dass eine Web-Adresse, URI, genau einen Seiteninhalt repräsentiert, und dass ein Web-/REST-Server auf mehrfache Anfragen mit demselben URI auch mit demselben Webseiteninhalt antwortet. Der Zweck von REST liegt schwerpunktmäßig auf der Maschine-Maschine-Kommunikation. REST stellt eine einfache Alternative zu ähnlichen Verfahren wie SOAP und WSDL und dem verwandten Verfahren RPC dar. Anders als bei vielen verwandten Architekturen kodiert REST keine Methodeninformation in den URI, da der URI Ort und Namen der Ressource angibt, nicht aber die Funktionalität, die der Web-Dienst zu der Ressource anbietet. Der Vorteil von REST liegt darin, dass im WWW bereits ein Großteil der für REST nötigen Infrastruktur, z. B. Web- und Application-Server, HTTP-fähige Clients, HTML- und XML-Parser, Sicherheitsmechanismen, vorhanden ist, und viele Web-Dienste per se REST-konform sind.

Das "Hypertext Transfer Protocol", HTTP, ist ein zustandsloses Protokoll zur Übertragung von Daten auf der Anwendungsschicht über ein Rechnernetz. Es wird hauptsächlich eingesetzt, um Webseiten, d.h. Hypertext-Dokumente, aus dem World Wide Web, WWW in einen Webbrowser zu laden. Es ist jedoch nicht prinzipiell darauf beschränkt und auch als allgemeines Dateiübertragungsprotokoll sehr verbreitet. HTTP wurde von der Internet Engineering Task Force, IETF, und dem World Wide Web Konsortium, W3C standardisiert. Aktuelle Version ist HTTP/1.1, HTTP/2 befindet sich in der Entwurfsphase. Die Weiterentwicklung wird von der HTTP-Arbeitsgruppe der IETF HTTPbis organisiert. Es gibt zu HTTP ergänzende, wie HTTPS für die Verschlüsselung übertragener Inhalte, und darauf aufbauende Standards wie das Übertragungsprotokoll WebDAV.

Ein "Proxy" ist eine Kommunikationsschnittstelle in einem Netzwerk. Er arbeitet als Vermittler, der auf der einen Seite Anfragen entgegen nimmt, um dann über seine eigene Adresse eine Verbindung zur anderen Seite herzustellen.

Der "Remote Procedure Call", RPC, ist eine Technik zur Realisierung von interprozesskommunikation. Sie ermöglicht den Aufruf von Funktionen in anderen Adressräumen. Im Normalfall werden die aufgerufenen Funktionen auf einem anderen Computer als das aufrufende Programm ausgeführt.

Die "JavaScript Object Notation", kurz JSON, ist ein kompaktes Datenformat in einer einfach lesbaren Textform zum Zweck des Datenaustauschs zwischen Anwendungen" und wird zum Beispiel unter http://www.json.org beschrieben.

Die "Extensible Markup Language", abgekürzt XML, ist eine Auszeichnungssprache zur Darstellung hierarchisch strukturierter Daten in Form von Textdateien. XML wird u. a. für den plattform- und implementations-unabhängigen Austausch von Daten zwischen Computersystemen eingesetzt.

Die "XML Path Language", XPath, ist eine vom W3-Konsortium entwickelte Abfragesprache, um Teile eines XML-Dokumentes zu adressieren und auszuwerten. XPath dient als Grundlage einer Reihe weiterer Standards wie XSLT, XPointer und XQuery. Seit ihrer Verabschiedung am 23. Januar 2007 hat XPath 2.0 die seit 1999 gültige Version XPath 1.0 abgelöst. XPath 2.0 hat einige Konzepte von XPath 1.0 neu definiert und verfügt zudem über einen wesentlich erweiterten Funktionsumfang, wie beispielsweise die Unterstützung regulärer Ausdrücke für Zeichenketten.

Unter dem Begriff "sensitive Daten" werden in dem vorliegenden Kontext Daten verstanden, die einer besonderen Sicherheitseinstufung unterliegen, z. B. personenbezogene Daten als Adressen, Sozialversicherungsnummern, Bank-/Kreditkartenverbindungen, Gesundheitsdaten. Die Zuordnung von Daten als sensitive oder nicht-sensitive Daten kann je nach Einsatzbereich variieren und orientiert sich zumindest an die gesetzlichen Datenschutzbestimmungen.

Eine "verantwortliche Organisation" nutzt eine Anwendung, auch für die Verarbeitung sensitiver Daten, und ist legal für die damit verarbeiteten Daten verantwortlich.

Die "öffentliche Zone", public zone, ist eine Netzwerkzone, die öffentlich zugänglich ist und über die z.B. auf eine Public Cloud zugegriffen wird. Dieses Netzwerk befindet sich außerhalb der Kontrolle der verantwortlichen Organisation und ist daher per Definition unsicher und nicht geeignet sensitive Daten im Klartext zu verarbeiten.
Die "sichere Zone", trusted zone, ist eine Netzwerkzone unter der Kontrolle der verantwortlichen Organisation. Das Netzwerk ist nur für den Anwenderkreis der Organisation zugänglich und gegen externes Eindringen nach dem Stand der Technik abgesichert. Die Clients der Anwender sind der sicheren Zone zugeordnet, ebenso eine Private Cloud.

"Verschlüsselung" bezeichnet den Vorgang, bei dem ein klar lesbarer Text, d.h. Klartext oder auch Informationen anderer Art wie Ton- oder Bildaufzeichnungen, mit Hilfe eines Verschlüsselungsverfahrens, d.h. Kryptosystem, in eine "unleserliche", das heißt nicht einfach interpretierbare Zeichenfolge, d.h. Geheimtext, umgewandelt wird. Als entscheidend wichtige Parameter der Verschlüsselung werden hierbei ein oder auch mehrere Schlüssel verwendet.

Die kryptographische "Schlüsselverwaltung" ist verantwortlich für die sichere Erzeugung und Speicherung von Schlüsseln zur Verschlüsselung von Daten.

Eine "homomorphe Verschlüsselung" ist ein kryptographisches Verfahren, welches über Homomorphie-Eigenschaften verfügt, wodurch sich Berechnungen auf dem Geheimtext durchführen lassen, die mathematischen Operationen des entsprechenden Klartextes entsprechen.

Der Begriff "Hardware-Sicherheitsmodul" HSM, englisch Hardware Security Module bezeichnet eine internes oder externes Vorrichtung zur effizienten und sicheren Ausführung kryptographischer Operationen oder Applikationen.

Im Folgenden wir die REST-Anwendungs-Architektur beschrieben. Innerhalb einer Anwendung, die auf dem REST Architekturschema basiert, werden Daten über eine zustandslose REST API ausgetauscht. Das REST Entwurfsmuster basiert dabei auf der Definition einer Reihe von Ressourcen und Verknüpfungen untereinander, mit denen die Daten bereitgestellt werden. Jede Ressource ist durch eine eindeutige URL definiert. Um mit diesen Ressourcen zu interagieren sind einfache atomare Operationen definiert, z.B. für die Erzeugung oder das Lesen von Ressourcen. Ressourcen können unterschiedliche Darstellungsformen (Repräsentationen) haben. Ein REST-konformer Server kann je nachdem, was die Anwendung anfordert, verschiedene Repräsentationen einer Ressource ausliefern, z.B. in verschiedenen Sprachen oder Formaten, z.B. HTML, JSON oder XML. Dabei erfolgt die Kommunikation zwischen Komponenten innerhalb einer verteilten Anwendung in der Regel in einem strukturierten, maschinenlesbaren Format wie JSON oder XML. Strukturiert bedeutet, dass die Repräsentation einer Ressource zur Übertragung in einer Anfragenachricht, zur Verarbeitung, Speicherung oder zur Übertragung in einer Antwortnachricht aus einem oder mehreren Elementen besteht, wobei ein Element zum Beispiel einem Attribut der Ressource entspricht. Für die Umsetzung des REST-Paradigmas wird ein zustandsloses Client-Server-Protokoll verwendet. Als Anwendungsschicht-Protokolle werden hauptsächlich HTTP und HTTPS eingesetzt. REST vereinheitlicht die Schnittstelle zwischen Systemen auf eine überschaubare und bezüglich des zu erwartenden Verhaltens standardisierte Menge von Aktionen. Welche Aktionen dies sind, ist in REST nicht festgelegt, aber alle Aktionen sind allgemein definiert, in der Regel durch die verwendeten Protokolle der Anwendungsschicht. Während REST als Abstraktion des WWW keine spezielle Implementierung und kein spezielles Protokoll fordert, ist doch zu beobachten, dass fast ausschließlich HTTP verwendet wird, wodurch auch die Menge der Aktionen festgelegt ist. REST-Clients, die HTTP verwenden, folgende Befehle absetzen, um Ressourcen anzufordern oder zu verändern:

| Befehl (HTTP-Methode) | Beschreibung |
|---|---|
| GET | fordert die angegebene Ressource vom Server an. GET weist keine Seiteneffekte auf, d.h. die abgerufenen Daten bleiben am Server unverändert. Aus diesem Grund wird GET auch als sichere Operation bezeichnet wird. |
| POST | fügt eine neue (Sub-)Ressource unterhalb der angegebenen Ressource ein. Da die neue Ressource noch keinen URI besitzt, adressiert der URI die übergeordnete Ressource. Als Ergebnis wird der neue Ressourcenlink dem Client zurückgegeben. POST kann im weiteren Sinne auch dazu verwendet werden, Operationen abzubilden, die von keiner anderen Methode abgedeckt werden. |
| PUT | die angegebene Ressource wird angelegt. Wenn die Ressource bereits existiert, wird sie geändert. |
| PATCH | ein Teil der angegebenen Ressource wird geändert. Hierbei sind Nebeneffekte erlaubt. |
| DELETE | löscht die angegebene Ressource. |
| HEAD | fordert Metadaten zu einer Ressource an. |
| OPTIONS | prüft, welche Methoden auf einer Ressource zur Verfügung stehen. |
| CONNECT | Dient dazu, die Anfrage durch einen TCP-Tunnel zu leiten. Wird meist eingesetzt, um eine HTTPS-Verbindung über einen HTTP-Proxy herzustellen. |
| TRACE | Gibt die Anfrage zurück, wie sie der Zielserver erhält. Dient etwa dazu, um Änderungen der Anfrage durch Proxyserver zu ermitteln. |

Im Folgenden wird eine Ausführungsform des erfindungsgemäßen Verfahrens beschrieben. Die beschrieben Ausführungsform betrifft ein Verfahren, um innerhalb einer verteilten IT-Anwendung, Daten transparent zu verschlüsseln und zu entschlüsseln und verschlüsselt zu verarbeiten. Die Ausführungsform veranschaulicht das Verfahren am Beispiel einer REST Schnittstelle, insbesondere an einer Anfrage und einer Antwort. Das beschriebene Verfahren ist jedoch nicht auf eine Schnittstelle nach dem REST Architekturmodell beschränkt und ist zum Beispiel auch auf Schnittstellen Kommunikation gemäß SOAP, JSON-RPC oder XML-RPC anwendbar. Lediglich zur Vereinfachung und Lesbarkeit bezieht sich das folgende Ausführungsbeispiel konkret auf die REST Schnittstelle.

Es ist vorgesehen, durch einen zusätzlichen Filter die vom REST Client erzeugte Anfrage zu analysieren und anhand vorgegebener Einstellungen dynamisch zu verschlüsseln. Dabei werden die strukturierten Daten (Ressourcen) innerhalb eines REST Aufrufes auf Elementebene verschlüsselt. Die Konfiguration definiert anhand eines eindeutigen Pfades zum Element auf welche Art und Weise die Verschlüsselung erfolgen soll. Das Verfahren sieht hierfür flexible Möglichkeiten vor, abhängig vom Einsatzszenario und den Sicherheits- und Funktionsanforderungen der Anwendung. Die Elemente werden verschlüsselt und die REST Anfrage wird dann an den Endpunkt weitergeleitet. Das System am Endpunkt hat keine Kenntnis über die Verschlüsselung und verarbeitet die Daten verschlüsselt. Beim Lesen von Daten werden die gelieferten Ressourcen ebenfalls anhand der Elementpfade identifiziert und die passenden Schlüssel aus der Schlüsselverwaltung abgerufen. Die Entschlüsselung erfolgt dabei transparent für den Aufrufer. Die Verschlüsselung- und Schlüsselverwaltung erfolgt dabei auf Seite des Aufrufers und verbleibt in dessen Hoheit.

Die Erfindung beschreibt ein Verfahren zur dynamischen und transparenten Verschlüsselung von REST Anfragen in einem verteilten Applikationsumfeld. Dadurch kann eine sichere Verarbeitung und Speicherung von sensitiven Informationen innerhalb einer hybriden Infrastruktur mit verschiedenen Sicherheitszonen ermöglicht gewährleistet werden.

Das Verfahren hat zumindest folgende vorteilhaften Eigenschaften:
- Das Verfahren macht sich die Vorteile des REST Paradigmas zunutze, um transparente Verschlüsselung von Dateninhalten zu ermöglichen;
- Selektive Verschlüsselung des Nachrichteninhalts von atomaren REST API Aufrufen, ohne dass dem REST Server und Client dies bekannt sein muss.
- Keine strukturelle Änderung des Nachrichteninhaltes, da die Verschlüsselung auf Basis von Attributen erfolgt.
- Schlüsselinformationen werden von den Dateninhalten getrennt, wodurch es einem Angreifer erschwert wird, die Daten zu entschlüsseln
- Detaillierte Kontrolle über die zu verschlüsselnden Daten und die Art der Verschlüsselung, durch den Einsatz einer flexiblen Konfiguration.
- Durch Einsatz verschiedener Verschlüsselungsebenen und Verschlüsselungsalgorithmen kann die Verschlüsselung an die Applikationslogik angepasst werden, so dass auch Operationen wie Suchen mit verschlüsselten Daten möglich bleiben.

Im Weiteren werden folgende Entitäten näher beschrieben: ein Verschlüsselungsfilter, eine Verschlüsselungskomponente, ein REST Client, ein REST Server Dienst, der auch als REST Service bezeichnet wird, und ein optionales Hardware Security Module, HSM. Der REST Client, der REST Server Dienst, sowie das HSM können ihrerseits mehreren Instanzen, Komponenten bzw. Diensten umfassen und mit verschiedenen Technologien implementiert sein. Das erfindungsgemäße Verfahren ist unabhängig von dieser konkreten Ausgestaltung des REST Client und des REST Server Dienstes einsetzbar.

Im Folgenden wird die Anwendung von Verschlüsselung in REST-basierten Anwendungen beschrieben. Durch den Bezug jeder REST-Operation zu einer eindeutigen Ressource, die einfachen atomaren Operationen und das strukturierte Datenformat, ist es möglich die Anfragen, die von einem REST-Client erzeugt werden zu analysieren und anhand einer vorgegebenen Konfiguration zu verschlüsseln. Dabei wird sichergestellt, dass die Schlüsselverwaltung und die Verschlüsselung nur innerhalb einer vertrauenswürdigen, sicheren Umgebung erfolgt und die Schlüssel nie die Kontrolle der verantwortlichen Organisation verlassen.

Die Erfindung beschreibt ein Verfahren, wie dies transparent für die Applikationslogik, die in auf dem Client und/oder Server selbst implementiert ist, durchgeführt werden kann.

Der Verschlüsselungsfilter, engl. Encryption Filter, ist die zentrale Komponente, die die Anfrage, engl. Request, vom Client entgegen nimmt, die Verschlüsselung anhand einer vorgegebenen Konfiguration, engl. Policy, durchführt und dann die Anfrage an den Server weiterleitet.

Der Filter analysiert die REST Anfrage und prüft die enthaltenen Nutzdaten. Dies können entweder strukturierte Daten, also Ressourcen, sein oder URL Parameter, wie z.B. für Suchanfragen.

Eine Anfrage zum Erstellen einer neuen Ressource erfolgt z.B. als POST-Anfrage:

```
      POST [base-url]/[type] {?_format=[mime-type]}
```

Anhand eines übergebenen Format Parameters oder einer Standardkonfiguration kann das Format der Nutzdaten ermittelt werden. Ein Beispiel ist im Folgenden für eine Ressource "Person" gegeben, die über die Attribute "resourceType", "name" und "birthDate" umfasst, Eine einfache Personen-Ressource 101 im JSON-Format mit Attributen für einen Namen 102, unterteilt in Familiennamen 103 und Vornamen 104, und ein Geburtsdatum 105 kann wie folgt aussehen:

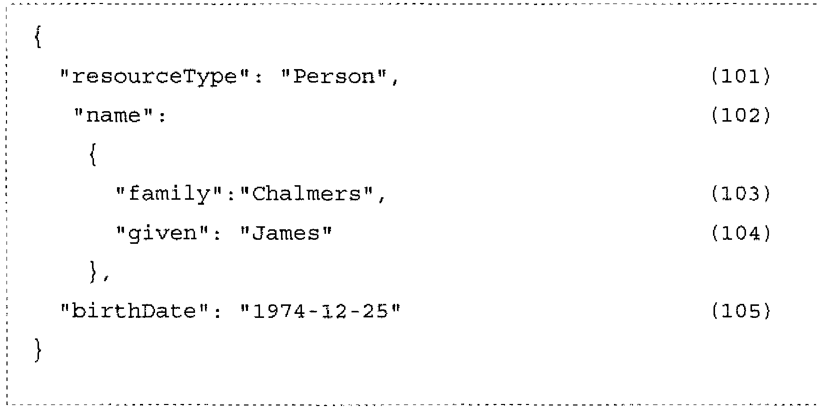

Wird, zum Beispiel, die Repräsentation einer Ressource vom Typ "Person" in einer Anfragenachricht übertragen, wird die Repräsentation einzelner Attribute als Anfrageelement bezeichnet. Wird die Repräsentation einer Ressource vom Typ Person in einer Antwortnachricht übertragen, wird die Repräsentation einzelner Attribute als Antwortelement bezeichnet.

Am dargestellten Beispiel im JSON-Format ist ein Attribut als Kombination "<Attributname>:<Attributwert>" angegeben. Die Repräsentation eines Attributs kann bei anderen Formaten, wie zum Beispiel XML, von der hier angegebenen Kombination abweichen. Insbesondere sind solche Formate möglich, die den Formatnamen nicht ausdrücklich angeben. Der Begriff Element, und insbesondere die Begriffe Anfrageelement und Antwortelement, können sich somit auf die Kombination "<Attributname>:<Attributwert>", aber auch lediglich auf den Attributwert beziehen.

Eine gegebene Repräsentation einer Ressource, zum Beispiel in einer Nachricht als Zeichensequenz, kann in Elemente zerlegt werden, die den jeweiligen Attributen der Ressource entsprechen. Dieses Bestimmen der Elemente einer Repräsentation einer Ressource wird auch als Zergliedern der Nachricht, bzw. Zergliedern der Anfragenachricht oder Zergliedern der Antwortnachricht, bezeichnet werden.

Der Filter greift dann auf seine Konfiguration zu, welche definiert, ob und wie ein entsprechendes Element verschlüsselt werden soll. Die Konfiguration kann dabei eine einfache Schlüssel-Wert-Kombination sein, die einen Attributpfad definiert, z.B. Person.name.family, oder komplexere Abfragesprachen enthalten, wie z.B. Regular Expressions, XPath, XQuery, JSONPath, die anhand der definierten Abfragen die passenden Attribute finden. Das Format der Konfiguration ist hierfür irrelevant, es sind Konfigurationen als einfache Textdateien, als XML Konfigurationen oder als Datenbankeinträge denkbar. Eine einfache textbasierte Konfiguration unter Nutzung von XPath-Ausdrücken könnte so aussehen:

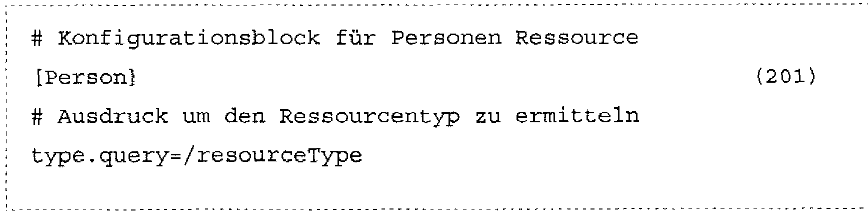

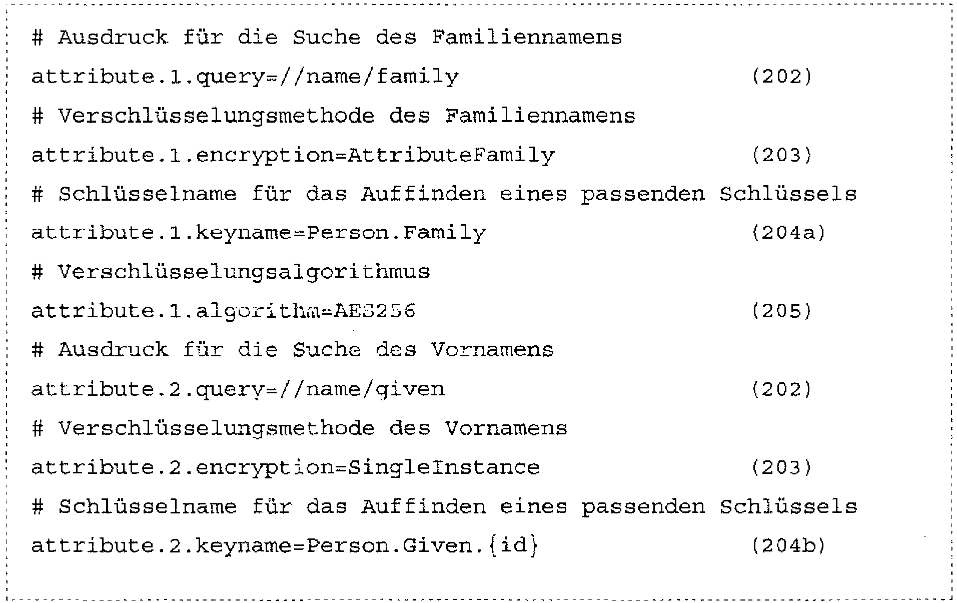

Innerhalb der Konfiguration können in jedem Konfigurationsblock für eine Ressource (201) beliebig viele Attributausdrücke (202) vorhanden sein. Für jedes zu verschlüsselnde Attribut können die Verschlüsselungsart (203), der Verschlüsselungsalgorithmus (205) und ein Schlüsselname (204a) bzw. ein Namensmuster (204b) angegeben werden. Gegebenenfalls wird auf Standardwerte zurückgegriffen. Das Namensmuster kann je nach Umsetzung ebenfalls komplexe Ausdrücke enthalten. Auf die gleiche Art und Weise wie Ressourcen Attribute können auch URL Abfrageparameter der aufgerufenen URL analysiert werden. Die Konfiguration kann dabei abhängig vom Ressource Typen, der aufgerufenen REST Methode oder der URL oder einer Kombination daraus sein.

Das Verfahren im Verschlüsselungsfilter umfasst folgende Schritte:
1. die Nutzdaten 301, die beispielsweise im JSON oder XML Format vorliegen, werden einer Anfrage, die in Schritt 304 erstellt wird, entnommen und anhand der Konfiguration 302 analysiert und zerlegt in Schritt 305;
2. die zu verschlüsselnden Attribute, das sind die Anfrageelemente, werden ermittelt in Schritt 306;
3. für jedes Attribut wird der passende Schlüssel abgerufen, bzw. ein neuer erstellt in Schritt 307a;
4. das Attribut wird verschlüsselt in Schritt 307b, wobei die Nutzerdaten 303 dann mit jeweils verschlüsselten Attributen vorliegen;
5. die Schlüsselinformationen werden abgespeichert in Schritt 308;
6. wenn alle Attribute entsprechend der Konfiguration verschlüsselt sind, wird die Anfrage weitergeleitet 309;
7. der Server verarbeitet die Anfrage mit den verschlüsselten Attributen in Schritt 310a;
8. das Ergebnis der Anfrage wird in Schritt 310b vom Server gesendet und vom Filter entgegengenommen und erneut analysiert in Schritt 311;
9. nach Prüfung in Schritt 312, ob es sich um Ressourcen handelt, werden eventuell verschlüsselte Attribute entschlüsselt in Schritt 313;
10. wurde in Zusammenhang mit der Anfragenachricht eine neue Ressource erstellt, bzw. eine neue Ressourcen-Id, wird die zurückgegebene Ressourcen URI bzw. Id genutzt, um die Schlüsselinformation mit der erstellten Ressource zu verknüpfen, und somit die Schlüsselinformation in Schritt 314 aktualisiert;
11. das entschlüsselte Ergebnis wird an den Client zurückgegeben in Schritt 315 und dort unverschlüsselt weiterverarbeitet in Schritt 316.

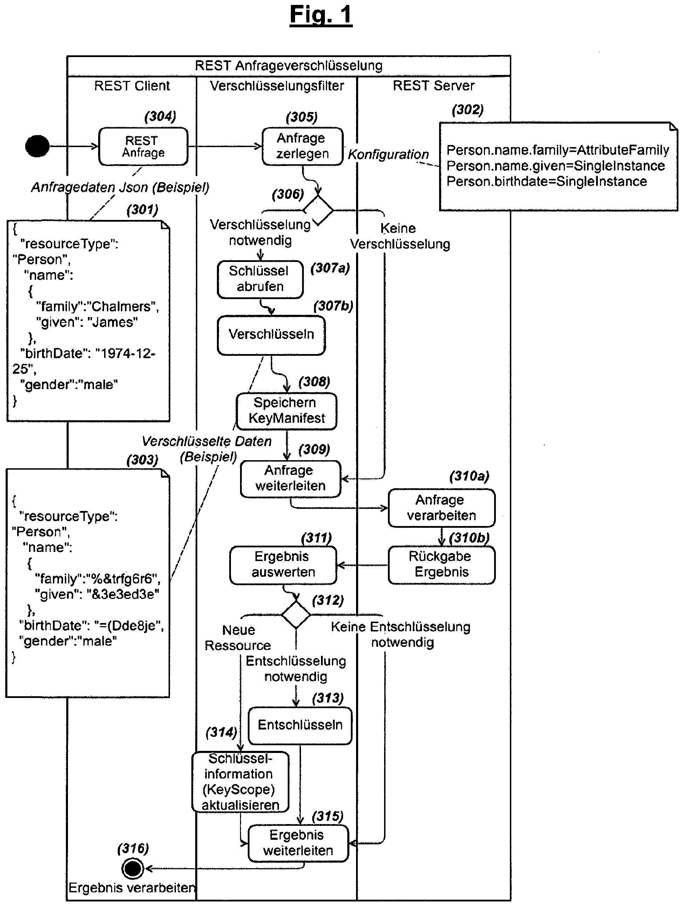

Die Schritte dieses Verfahrens sind in Figur 1 dargestellt, wobei die Ausführung der Schritte den jeweiligen Entitäten Client, Filter oder Server jeweils nach Spalten zugeordnet ist.

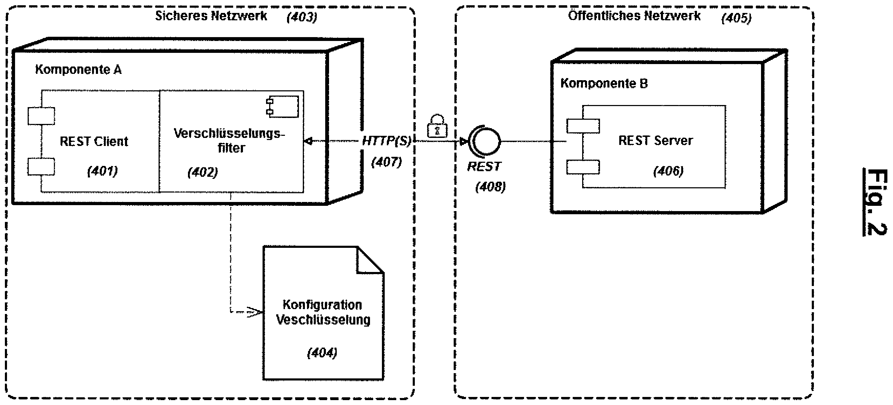

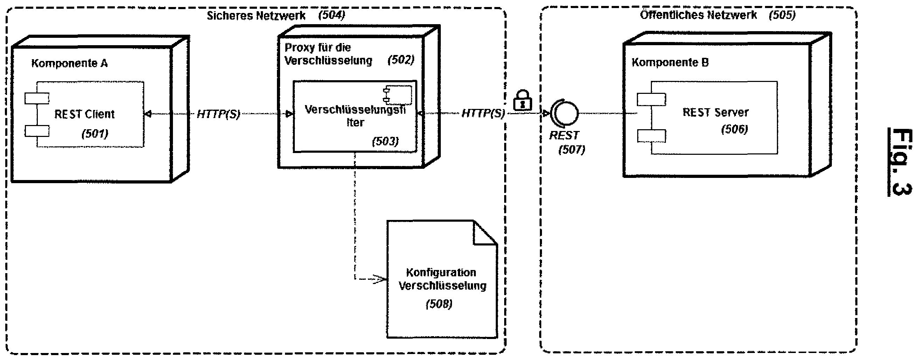

Um die transparente REST-Verschlüsselung zu nutzen, kann der Verschlüsselungsfilter auf zwei Arten genutzt werden, die im Folgenden unter Bezug auf Figur 2 und Figur 3 beschrieben werden.

Figur 2 zeigt die erste Art der Nutzung und Anordnung, wobei der Anfragefilter 402, engl. Request Filter, auf Clientseite angeordnet ist, wo somit auch die Verschlüsselung durchgeführt wird. Dabei wird der Filter direkt in die Applikation auf Seite des REST-Client 401 integriert. Dies kann durch Anpassungen im Applikationscode erfolgen oder durch Nutzung einer Filterfunktion, die in aktuellen Web- und REST-Clients optional durch Konfiguration hinzugefügt werden können. Der REST Server 406 kann in einer öffentlichen Netzwerkzone 405 ablaufen und stellt eine REST-Schnittstelle 408 bereit. Der REST-Client 402 und der Verschlüsselungsfilter 403 sollten, um die Sicherheit zu gewährleisten, in einer sicheren Netzwerkzone 403 betrieben werden. Die Verschlüsselungskonfiguration 404 bestimmt wie ein ausgehende Anfrage 407 verschlüsselt und eine Antwort entschlüsselt werden soll.

Figur 3 zeigt eine zweite Variante der Nutzung eines Proxy 502 für die Verschlüsselung. Dieser Proxy ist ein eigener Knoten im sicheren Netzwerk 504, über den alle Anfragen des REST Client 501 an den REST Server 506, 507 geleitet werden. Innerhalb des Proxy analysiert der Verschlüsselungsfilter 503 die Anfrage, so wie im ersten Fall und führt die Verschlüsselung anhand der Konfiguration 508 durch. Die Nutzung eines Proxy ist für die Anwendung transparent, benötigt aber einen zusätzlichen Netzwerkknoten und kann bei Nutzung von HTTPS zusätzliche Konfigurationen oder Anpassungen innerhalb der Anwendung bedeuteten.

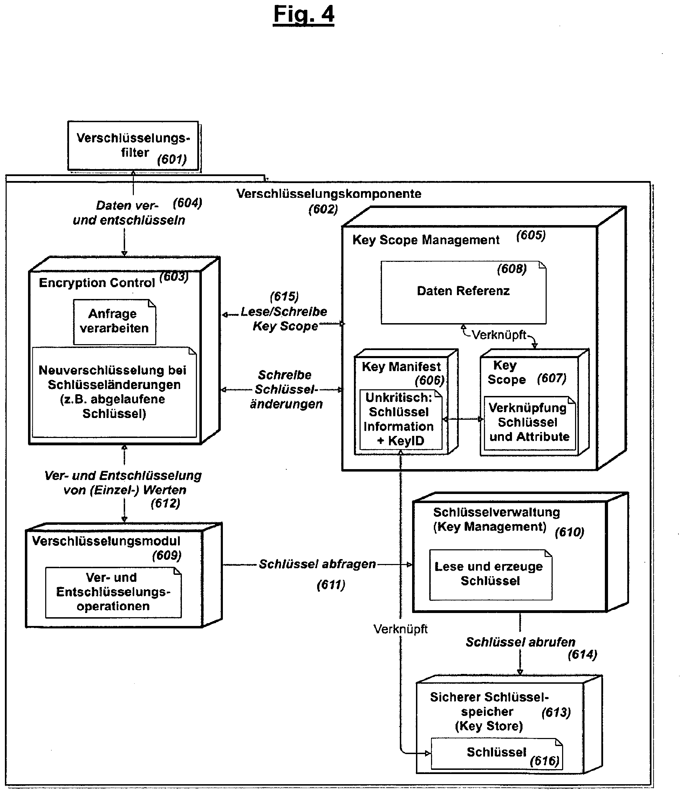

Im Folgenden werden Komponenten zur Steuerung und Durchführung der Verschlüsselung, und zur Verwaltung und Erzeugung von Schlüsselinformation und Schlüsseln und deren Zusammenwirken unter Bezugnahme auf Figur 4 beschrieben.

Die Verschlüsselung der Daten wird über eine Verschlüsselungskomponente 602 durchgeführt, die verschiedene Funktionen umfasst. Zum einen ist die Komponente für die Verschlüsselung und Entschlüsselung der Daten zuständig, die wie zuvor beschrieben vom Verschlüsselungsfilter 601 aufgerufen wird. Zum anderen sieht die Verschlüsselungskomponente eine flexible Schlüsselgenerierung und -verwaltung vor. Die dafür sorgt, dass die Daten abhängig der jeweiligen Konfiguration durch unterschiedliche Schlüssel verschlüsselt werden können. Anhand der Konfiguration wird entschieden, ob Daten während eines REST-Aufrufs verschlüsselt werden.

Das REST Architekturmodell beschreibt die Daten als Ressourcen mit Verknüpfungen zwischen den Ressourcen. Jede Ressource enthält eine Anzahl von Attributen, engl. Attributes, die die Datenwerte enthalten. Ressourcen können durch die passenden Verknüpfungen eine Hierarchie mit Eltern- und Kind-Ressourcen beschreiben. Der Verschlüsselungsmechanismus der REST API Verschlüsselung erlaubt die Verschlüsselung der Datensätze auf verschiedenen Ebenen und mit unterschiedlichen Schlüsseln, abhängig von den Sicherheits- und Performanceanforderungen. Es können z.B. alle Eigenschaften einer Ressource mit einem ressourcenspezifischen Schlüssel verschlüsselt werden oder bestimmte Attribute von Ressourcen gleichen Typs mit dem gleichen Schlüssel verschlüsselt werden. Diese Konfiguration ermöglicht es, unter Nutzung eines homomorphen Verschlüsselungsalgorithmus', eingeschränkte Suchen über verschlüsselte Daten durchzuführen, ohne diese zu entschlüsseln. Zusätzlich können noch Schlüssel für Ressourcenhierarchien erstellt und genutzt werden, um zusammengehörige Datensätze mit dem gleichen Schlüssel zu verschlüsseln, was für eine bessere Performance sorgen kann. Es können auch verschiedene Operationen kombiniert werden.

Die Verschlüsselungsmöglichkeiten werden hierfür in verschiedene Verschlüsselungsstufen unterteilt. Die Verschlüsselungsstufen können je nach Einsatzszenario angepasst und ergänzt werden. Dies muss dann in der eigentlichen Implementierung des Verschlüsselungsfilters berücksichtigt werden. So sind neben den nachstehend genannten generellen Möglichkeiten auch anwendungsspezifische Verschlüsselungsstufen denkbar, z.B. die Schlüsselauswahl anhand eines Zeitstempels, so dass zum Beispiel alle Datensätze eines Jahres mit dem gleichen Schlüssel verschlüsselt sind.

Generell sind unterschiedliche Verschlüsselungsstufen, engl. Encryption Levels, denkbar und einsetzbar. Beispielhafte Verschlüsselungsstufen sind in der folgenden Tabelle aufgeführt:

| Verschlüsselungsstufen | Key Scope | Beschreibung |
|---|---|---|
| Type | Ressourcen Typ | Alle Ressourcen des gleichen Typs werden mit dem gleichen Schlüssel verschlüsselt. |
| SingleInstance | Ressource Instanz | Jede Instanz einer Ressource ist mit einem anderen Schlüssel verschlüsselt |
| SingleAttribute | Ressource Instanz Attribut | Jedes Attribut einer Ressource ist mit einem anderen Schlüssel verschlüsselt |
| OneTimelnstance | Ressource Instanz | Jede Instanz einer Ressource ist mit einem anderen Schlüssel verschlüsselt, bei jeder neuen Verschlüsselung wird ein neuer Schlüssel erzeugt. |
| OneTimeAttribute | Ressource Instanz Attribut | Jedes Attribut einer Ressource ist mit einem anderen Schlüssel verschlüsselt, bei jeder neuen Verschlüsselung wird ein neuer Schlüssel erzeugt. |
| AttributeFamily | Ressource Attributfamilie | Das gleiche Attribut von Ressourcen gleichen Typs wird mit dem gleichen Schlüssel verschlüsselt. |
| ParentResource | Ressourcenbaum | Eine Hierarchie von Ressourcen wird mit dem gleichen Schlüssel verschlüsselt. Der Schlüssel ist dabei abhängig von einem bestimmten Elternknoten. |

Für jede verschlüsselte Ressource wird während des Verschlüsselungsprozesses ein Key Manifest erzeugt. Dieses Key Manifest beschreibt die Stufe und die Art der Verschlüsselung, was zusammengefasst als Key Scope bezeichnet wird, und einen Verweis auf den verwendeten Schlüssel. Weiterhin wird ein eindeutiger Verweis, das ist eine Id, erzeugt, der es erlaubt zu bestimmen, auf welche Ressource sich diese Information bezieht.

Anhand diese Informationen können die Daten später wieder mit dem korrekten Schlüssel verschlüsselt werden oder sie kann genutzt werden um zusätzliche Aufgaben durchzuführen, wie einen regelmäßigen Schlüsselaustausch.

Über eine Schlüsselkontrollkomponente, engl. Encryption Control Component, 603 können die Daten während eines REST-Aufrufs, umfassend eine Antrage und eine Antwort, durch den Verschlüsselungsfilter verschlüsselt in Schritt 602 und entschlüsselt in Schritt 604 werden. Um die Integrität der Verschlüsselung zu gewährleisten sollten alle Komponenten der Verschlüsselungskomponente in der sicheren Zone instantiiert werden. Die Schlüsselkontrollkomponente fragt beim Key Scope Management die Schlüsselinformationen für das Ver- und Entschlüsseln einer Ressource in Schritt 615 ab. Das Key Scope Management 605 verwaltet Informationen zu den genutzten Schlüsseln. Dabei wird die Schlüsselinformation im Key Manifest 606 gespeichert, während die Verknüpfung eines Key Manifest zu den Daten 608 im Key Scope 607 gespeichert. Das Key Scope 607 enthält die Information, welche Ressourcen und Attribute mit welchem Schlüssel 616 verschlüsselt wurden. Das Key Scope Management speichert das Key Manifest und die Referenz auf die verschlüsselten Daten in einem Key Scope Datensatz ab 607. Dabei sind Key Scope Informationen 607, Schlüssel 616 und verschlüsselte Daten 608 voneinander getrennt.

Anhand der Key Manifest Informationen werden die passenden Schlüssel 616 in Schritt 611 ermittelt und über die kryptographische Schlüsselverwaltung, Key Management, 610 aus dem Key Store 613 abgerufen in Schritt 614. Die Schlüsselverwaltung kann auch durch eine externe Komponente wie z.B. ein Hardware Security Module bereitgestellt werden. Die eigentliche Verschlüsselung bzw. Entschlüsselung in Schritt 612 wird durch ein Verschlüsselungsmodul 609 durchgeführt. Das Verschlüsselungsmodul selber braucht dabei keine Kenntnisse über das Ressourcenmodell oder die konfigurierten Verschlüsselungsstufen zu besitzen.

Verschlüsselung, Verschlüsselungsalgorithmen und kryptographische Schlüsselverwaltung sind bekannte Konzepte. Für die Erfindung ist es unerheblich, welche konkreten Verfahren und Technologien hier genau eingesetzt werden, Zu beachten ist jedoch, dass sich aufgrund des Einsatzszenarios, der Anwendung und der zu verschlüsselnden Daten bestimmte Restriktionen und Anforderungen an die Verschlüsselung ergeben können, wie z.B. die Nutzung eines homomorphen Verschlüsselungsalgorithmus um bestimmte Verarbeitungsfunktionen auf den verschlüsselten Daten erlauben.

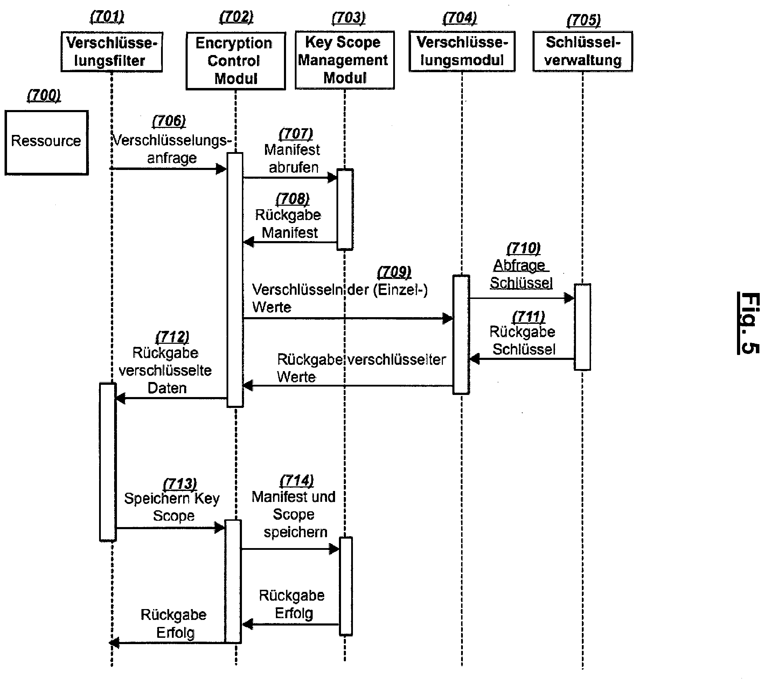

Im Folgenden wird unter Bezugnahme auf Figur 5 der Ablauf einer Verschlüsselung und das Zusammenspiel der beteiligten Komponenten beschrieben. Wenn durch den Verschlüsselungsfilter 701 eine Ressource 700 verschlüsselt werden soll, übergibt in Schritt 706 der Verschlüsselungsfilter 701 Informationen über die Ressource, Attribut, Id und Schlüsselverfahren an das Encryption Control Modul 702. Das Encryption Control Modul 702 fragt in Schritt 707 das passende Key Manifest über das Key Scope Management Modul 703 an oder erzeugt ein neues Manifest und einen neuen Schlüssel, in Fall dass unter der gegeben Id noch kein Schlüsselmanifest abrufbar ist. Das Key Manifest wird in Schritt 708 erhalten und die zu verschlüsselnden Daten werden dann entsprechend der Verschlüsselungskonfiguration an das Verschlüsselungsmodul 704 übergeben in Schritt 709. Anhand des Key Manifests kann das Verschlüsselungsmodul aus der Schlüsselverwaltung 705 den passenden Schlüssel, nach Anfrage in Schritt 710, in Schritt 711 abrufen und die Daten verschlüsseln und in Schritt 712 verschlüsselte Daten an den Verschlüsselungsfilter übergeben. Wenn die Ressourcen URI / Id während der Verschlüsselung bekannt ist, wird das Key Manifest mit den korrekten Referenzen gespeichert in Schritten 713 und 714. Bei einer Anfrage zum Erstellen einer neuen Ressource ist die Ressourcen URI / Id erst nach erfolgreicher Verarbeitung durch den REST Server bekannt. In diesem Fall wird eine temporäre Id erzeugt, die vom Verschlüsselungsfilter anhand der Antwort des REST Server mit der korrekten Ressourcen URI / Id aktualisiert wird in Schritt 713.

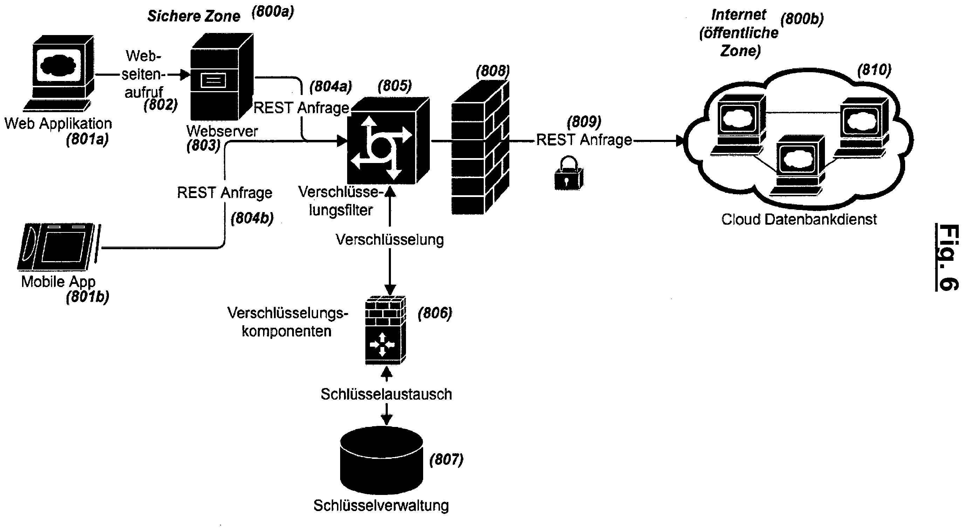

Figur 6 zeigt ein Szenario zum Einsatz eines Verschlüsselungsfilters für einen REST-basierten Datenbankdienst, der durch einen oder mehrere Server in einer Cloud bereitgestellt wird. In diesem Szenario wird eine Applikation innerhalb der sicheren Zone 800a ausgeführt, dies kann z.B. eine Webapplikation 801a auf einem Webserver 802, eine Desktop-Applikation oder eine Mobile Applikation, App, 801b auf einem Smartphone sein. Die Anzeige der Daten erfolgt damit innerhalb der sicheren Zone, die durch übliche technische Maßnahmen wie zum Beispiel eine Firewall 808 gegen unbefugten Zugriff abgesichert ist. Um die Daten persistent zu Speichern wird ein über das Internet öffentliche Zone 800a verfügbarer Datenbankdienst in einer Cloud 810 genutzt. Der Dienst stellt eine REST Schnittstelle bereitstellt. Beispiele hierfür sind Mongolabs, dessen REST Schnittstelle unter http://docs.mongolab.com/restapi/ angegeben ist, oder elasticsearch, das unter http://www.elasticsearch.org/ beschrieben wird. Die im Cloud-Dienst gespeicherten Daten befinden sich außerhalb der Kontrolle der verantwortlichen Organisation. Es könnte beispielsweise ein Administrator des Dienstanbieters Kenntnis von den Daten erlangen oder sogar Daten in einer Art und Weise verändern, die nicht erkennbar ist.

Bei der Nutzung einer REST Schnittstelle zum Speichern und Laden von Daten kann die Verschlüsselung die Datensicherheit und die Datenintegrität gewährleisten. Durch den Verschlüsselungsfilter 805 werden die Attribute teilweise verschlüsselt. Dazu nutzt der Verschlüsselungsfilter, die Verschlüsselungskomponenten 806 innerhalb der sicheren Zone. Die Schlüssel und Schlüsselinformationen werden innerhalb der sicheren Zone gespeichert und verwaltet 807 und verlassen diese nicht.
Die Speicherung kann dann in einer Datenbank in der öffentlichen Zone erfolgen, ohne dass die sensitiven Daten lesbar sind.

Hier kann z.B. ein Webserver die Daten vom Datenbankdienst per REST speichern und lesen 804a und in HTML Seiten zur Anzeige in einem Webbrowser verwenden.

Eine App greift eventuell direkt auf das REST API 804b des Datenbankdienstes zu und zeigt die Daten innerhalb der App an.

Die Datenspeicherung erfolgt über einen REST-POST Befehl an den Cloud Datenbankdienst. Ein solches API könnte so aussehen:

```
  POST /databases/{database}/resources/person
  Content-Type: application/json
  Body: Resource
  Return: id
```

Die Datenspeicherung wird am Beispiel einer einfachen REST-Ressource, die eine Person angibt, im Folgenden Personen-Ressource, näher erläutert.

Eine Personen-Ressource hat Attribute für den Ressource Typ, "resourceType" 101, Namen, "name", 102 unterteilt in Vorname, "given", 104 und Familienname, "family", 103 und ein Geburtsdatum, "birthDate" 105.

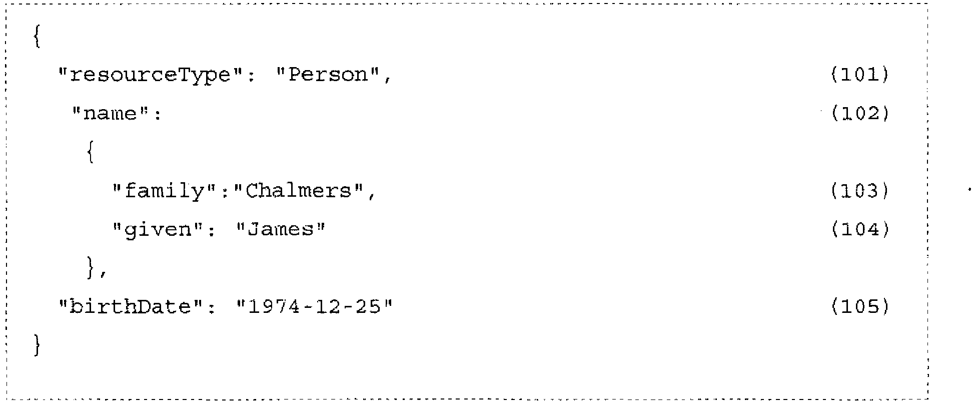

Die zuvor beschriebene Konfiguration bzw. Policy, vgl. 201 bis 204b, sieht unter anderem vor, dass der Familienname mit einem Ressourcentyp-spezifischen Schlüssel verschlüsselt wird. Dies hat zur Folge, dass alle Personen-Ressourcen den gleichen Schlüssel nutzen. Dies erlaubt es auf Server-Seite über das Attribut "name" nach bestimmten Ressourcen zu suchen, obgleich das Attribut auf Server-Seite nur verschlüsselt vorliegt, jedoch das "name" Attribut aller Ressourcen mit dem gleichen Schlüssel verschlüsselt ist. Je nach eingesetztem Algorithmus kann dies verschiedene Einschränkungen haben, z.B. nur eine Gleichheitssuche oder bei additiv-homomorpher Verschlüsselung auch die Suche nach Wortteilen.

Das Geburtsdatum und der Vorname werden mit einem instanzspezifischen Schlüssel verschlüsselt, so dass jede Personen-Ressource einen eigenen Schlüssel verwendet.

Die verschlüsselte Ressource könnte nach dem Speichern wie folgt aussehen. Alle Attribute 902 sind verschlüsselt. Nach dem Speichern ist eine Id 901 mit dem Wert "4711" im Datensatz vorhanden.

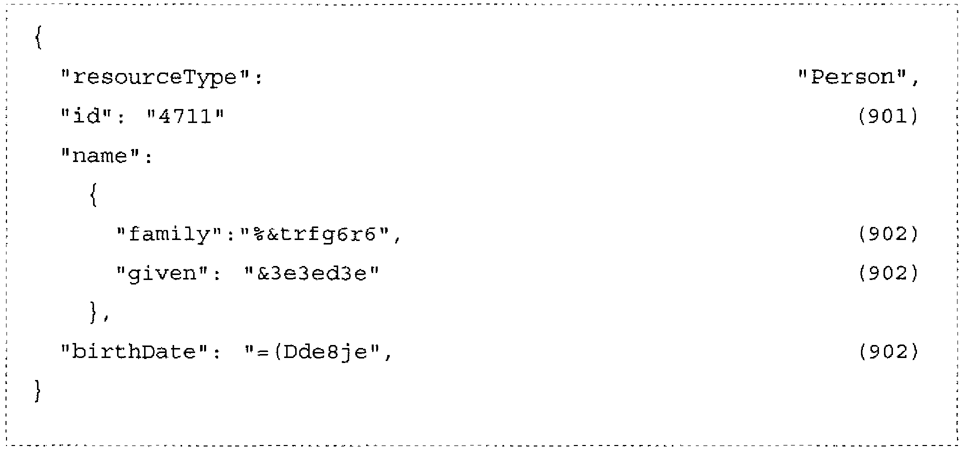

In der Schlüsselverwaltung werden die Verweise zu den genutzten Schlüsseln verwaltet. Die Schlüssel selbst können in einer Schlüsseldatenbank oder einer HSM gespeichert sein.

Folgende Informationen werden von der Schlüsselverwaltung gespeichert:

| Ressource Typ | Ressource Id | Attribut | Verschlüsselungsmodus | Schlüssel | Bemerkung |
|---|---|---|---|---|---|
| Person | | name.fa mily | AttributeFamily | 1 | Der allgemeine Schlüssel für die Attributverschlüsselung des Attributs family |
| Person | 4711 | name.fa mily | AttributeFamily | 1 | Der spezifische Schlüssel der Verschlüsselung des Attributs family für die Instanz 4711 Durch Umschlüsselung und Begrenzungen in der Schlüsselnutzung kann sich dies unter Umständen vom aktuell gültigen Allgemeinen Schlüssel unterscheiden |
| Person | 4711 | | Singlelnstance | 2 | Der aktuell gültige Instanzschlüssel für die Personen Instanz 4711 |
| Person | 4711 | name.given | Singlelnstance | 2 | Der spezifische Schlüssel der Verschlüsselung des Attributs given für die Instanz 4711 |
| Person | 4711 | birthdate | Singlelnstance | 2 | Der spezifische Schlüssel der Verschlüsselung des Attributs birthdate für die Instanz 4711 |

Der Datenabruf erfolgt über einen REST-GET Befehl an den Cloud Datenbankdienst. Die dem Befehl entsprechende Anfragenachricht könnte z.B. wie folgt aussehen:

```
  GET /databases/{database}/resources/person?id=4711
  Content-Type: application/json
  Antwort: Eine Ressource
```

Der Verschlüsselungsfilter prüft die URL und die Parameter, ob ein oder mehrere Parameter verschlüsselt werden müssen. Da der id Parameter nicht verschlüsselt ist, wird der Aufruf unverändert weitergeleitet.

Als Ergebnis wird die verschlüsselte Personen-Ressource an den Filter zurückgegeben. Der Filter analysiert das Ergebnis und erkennt, dass es sich um eine Ressource vom Typ Person mit der Id 4711 handelt. Anhand der zugehörigen Policy erkennt der Filter, dass eine Verschlüsselung notwendig ist. Der Filter fragt das Verschlüsselungsmodul mit den Informationen zu Typ und Id an. Mit diesen Informationen können die passenden Schlüssel aus der Schlüsselverwaltung abgerufen werden und die Daten werden entschlüsselt.

Die entschlüsselte Ressource wird dann an den Aufrufer zurückgegeben.

Die Suche erfolgt über den gleichen REST-GET Befehl. Es werden nur zusätzliche Suchparameter übergeben.

```
 GET /databases/{database}/resources/person?query={"name.family":
 "Chalmers"}
 Content-Type: application/json
 Antwort: Eine oder mehrere Ressourcen
```

Wieder prüft der Verschlüsselungsfilter die URL und die Parameter, ob ein oder mehrere Parameter verschlüsselt werden müssen. Es wird erkannt, dass der Suchparameter name.family eine (Attribut-)familienbasierte Verschlüsselung nutzt und der Parameter wird mit dem entsprechenden Schlüssel aus der Schlüsselverwaltung verschlüsselt. Damit die Suche funktioniert, muss der genutzte Schlüssel für die Verschlüsselung des Familiennamens für alle Ressourcen gleich sein und der Algorithmus muss für gleiche Klartext-Werte auch den gleichen verschlüsselten Wert erzeugen. Durch Nutzung eines additiv-homomorphen Algorithmus wären auch Suchen nach Wortteilen möglich.

Die Anfrage könnte dann wie folgt aussehen:

```
  GET /databases/{database}/resources/person?query={"name.family":
  "%&trfg6r6"}
```

Als Ergebnis wird eine Liste von verschlüsselten Personen-Ressourcen an den Filter zurückgegeben. Der Filter analysiert das Ergebnis und entschlüsselt die Daten wie oben beschrieben. Die entschlüsselte Ressource bzw. Ressourcen werden dann an den Aufrufer zurückgegeben.

Mit Hilfe von zusätzlicher Logik im Verschlüsselungsfilter kann man auch Szenarien unterstützen in denen mehrere Schlüssel für ein Attribut vorhanden sind, z.B. wenn ein Schlüssel nur eine begrenzte Gültigkeit hat, bevor er verfällt und ein Teil der Daten mit dem alten und ein Teil mit einem neuen Schlüssel verschlüsselt ist. Hier kann der Filter das Attribut mit allen möglichen Schlüsseln verschlüsseln und die Anfrage entsprechend anpassen, dass nach allen Werten gesucht wird.

Ein Beispiel für den Einsatz verschiedener Verschlüsselungsstufen wird im Folgenden beschrieben, wobei eine weitere fiktive Ressource Account angenommen wird. Die Account-Ressource beschreibt einen Kontodatensatz mit folgenden Attributen:

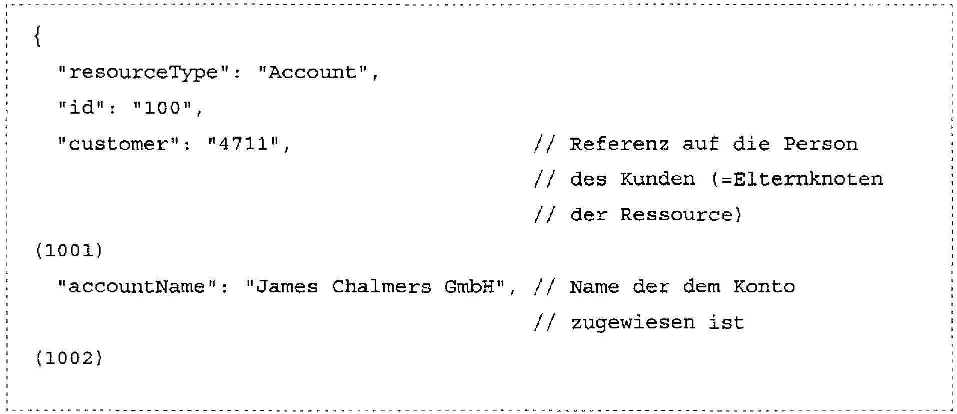

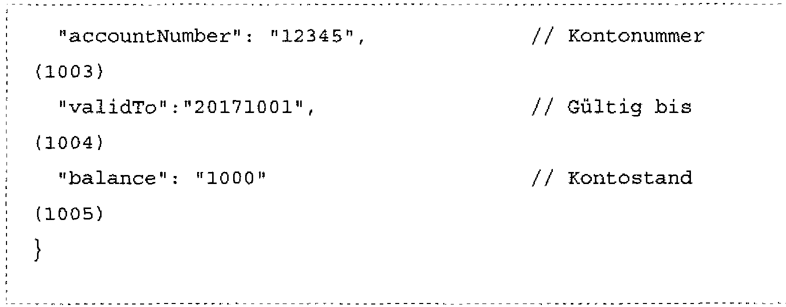

In der Policy sind verschiedene Verschlüsselungsstufen definiert, um unterschiedliche Sicherheits- und Funktionsanforderungen zu erfüllen.

| Ressource | Attribut | Verschlüsselung | Beschreibung |
|---|---|---|---|
| Account | customer (1001) | Keine | Das Customer Attribut hält die Referenz auf die Personen-Ressource, die dem Kunden zugeordnet ist. Dies ist im Rahmen einer Ressourcenhierarchie der Elternknoten. Um die hierarchische Verschlüsselung nach Elternknoten zu nutzen, ist es sinnvoll, dass die Referenz unverschlüsselt lesbar ist, um ein mehrmaliges Entschlüsseln zu vermeiden. |
| Person | name.family (103) | AttributeFamily | Der Name des Kunden wird in der Personen-Ressource so verschlüsselt, dass alle Ressourcen vom Typ Person für den Namen den gleichen Schlüssel nutzen. Dies erlaubt es bei Suchanfragen den entsprechenden Suchbegriff für den Namen ebenfalls mit diesem Schlüssel zu verschlüsseln und so eine Suche auf den verschlüsselten Daten zu ermöglichen. Wenn ein additiv-homomorpher Algorithmus für die Verschlüsselung verwendet wird, können auch Wortanfänge gesucht werden. |
| Account | accountName (1002) | ParentResource (Person) | Der Kontoname wird mit einem Schlüssel verschlüsselt, der abhängig vom Elternknoten ist. In diesem Fall die Referenz auf die Person mit Id 4711. Alle Account Ressourcen, die dieser Person zugewiesen sind, nutzen den gleichen Schlüssel zur Verschlüsselung des accountName properties. Der Vorteil dieser Verschlüsselungsstufe ist, dass nur wenige Schlüssel benötigt werden, um Ressourcenhierarchien zu verschlüsseln. Dies verbessert auch die Geschwindigkeit des Ver- und Entschlüsselns, da bei entsprechender Implementierung für das Entschlüsseln einer Ressourcenhierarchie der Schlüssel nur einmal abgerufen werden muss. |
| Account | accountNumber (1003) | SingleAttribute | Es wird ein spezifischer Schlüssel für das Attribut accountNumber verwendet. Jede Ressourceninstanz erzeugt für das Attribut einen eigenen Schlüssel. Dies erhöht die Sicherheit, da zum kompletten entschlüsseln einer Ressource mehrere Schlüssel benötigt werden. |
| Account | validTo (1004) | Singlelnstance | Es wird ein spezifischer Schlüssel für alle Attribute der Instanz verwendet, die mit der Stufe Singlelnstance verschlüsselt werden. Jede Ressourceninstanz erzeugt einen eigenen Schlüssel. Bei dieser Stufe kann man mit einem Schlüssel eventuell mehrere Attribute einer Instanz entschlüsseln, allerdings hat jede Instanz einen eigenen Schlüssel. Somit ist diese Methode ein guter Kompromiss zwischen höherer Sicherheit durch mehrere Schlüssel und Geschwindigkeit beim Ver- und Entschlüsseln von Ressourcen. |
| Account | balance (1005) | OneTimeAttribute | Diese Verschlüsselungsstufe bietet die höchste Sicherheit. Bei jedem neuen Verschlüsseln der Ressource, z.B. beim Aktualisieren, wird ein neuer Schlüssel erzeugt und das Attribut balance damit verschlüsselt. Damit kann man zusätzlich sicherstellen, dass die Daten nicht auf Serverseite manipuliert werden. So kann z.B. verhindert werden, dass ein DB Administrator den verschlüsselten Wert eines Kontos kopiert und später wieder die in den Datensatz einfügt, wenn der tatsächliche Wert niedriger ist. Da der ursprüngliche Wert mit einem anderen Schlüssel verschlüsselt wurde, kann eine solche Manipulation entdeckt werden. |

Die Beschreibung der erfindungsgemäßen Vorrichtung nimmt Bezug auf Komponenten oder Elemente als Mittel zur Ausführung einzelner Schritte des erfindungsgemäßen Verfahrens. Für den Fachmann ist klar, dass die konkrete Ausgestaltung bzw. Implementierung eines Mittels zur Ausführung eines Schrittes eines erfindungsgemäßen Verfahrens in geeigneter Weise durch eine oder mehrere einzelnen Komponenten, Module oder Elemente erfolgen kann, die jeweils in Form von Hardware, Software, oder auch als Hardware-Software-Kombination implementiert werden. Dem Fachmann ist ferner klar, dass mehrere Komponenten oder Elemente, sofern sie gemeinsam ein Mittel zur Ausführung eines erfindungsgemäßen Verfahrensschritts bilden, ggf. Wechselwirkung zueinander stehen oder stehen müssen, wobei dann erforderlichenfalls geeignete zur Realisierung der Kommunikation zwischen den einzelnen Komponenten dienende Schnittstellen vorgesehen werden, die ebenfalls mittels Hardware, Software oder als Hardware-Software-Kombination implementiert werden können.

## Patentansprüche

1. Verfahren zur verschlüsselten Kommunikation, die einem Representational State Transfer, REST, Schema folgt, zwischen einem Client und einem Server,
wobei die Kommunikation eine erste und zweite Anfragenachricht, die jeweils ein oder mehrere Anfrageelemente beinhalten, und eine erste und zweite Antwortnachricht, die jeweils ein oder mehrere Antwortelemente beinhalten, wobei jede Anfragenachricht und jede Antwortnachricht einer Ressource zugeordnet ist, und wobei das Anfrageelement und das Antwortelement einem Attribut einer Ressource entspricht, umfasst,
umfassend die folgenden Schritte:
Empfangen (304) einer ersten Anfragenachricht (301) von dem Client;
Zergliedern (305) der ersten Anfragenachricht (301) in Anfrageelemente;
für mindestens ein Anfrageelement der ersten Anfragenachricht (301), Bestimmen ob das Anfrageelement verschlüsselt werden soll basierend auf einer vorbestimmten Konfiguration (302);
für jedes Anfrageelement, das verschlüsselt werden soll, Bestimmen (306) von Schlüsselinformation zur Verschlüsselung basierend auf der vorbestimmten Konfiguration (302), Verschlüsseln (307b) des Anfrageelements in ein verschlüsseltes Anfrageelement basierend auf der Schlüsselinformation zur Verschlüsselung, Aktualisieren und Speichern (308) der Verschlüsselungsinformation in einem Schlüsselmanifest;
Zusammensetzen einer zweiten Anfragenachricht aus den Anfrageelementen der ersten Anfragenachricht, wobei jedes Anfrageelement, das verschlüsselt werden soll, durch das entsprechende verschlüsselte Anfrageelement ersetzt wird;
Senden (309) der zweiten Anfragenachricht an den Server;
Empfangen (310b) einer ersten Antwortnachricht von dem Server;
Zergliedern (311) der ersten Antwortnachricht in Antwortelemente;
für jedes Antwortelement der ersten Antwortnachricht, Bestimmen (312) ob das Antwortelement entschlüsselt werden muss basierend auf der vorbestimmten Konfiguration (302);
für jedes Antwortelement, das entschlüsselt werden muss, Bestimmen von Schlüsselinformation zum Entschlüsseln aus dem Schlüsselmanifest, und Entschlüsseln (313) des Antwortelements basierend auf der Schlüsselinformation zum Entschlüsseln;
Zusammensetzen einer zweiten Antwortnachricht aus den Antwortelementen der ersten Antwortnachricht, wobei jedes Antwortelement, das entschlüsselt werden muss, durch das entsprechende entschlüsselte Antwortelement ersetzt wird; und
Senden (315) der zweiten Antwortnachricht an den Client.

2. Verfahren nach Anspruch 1, wobei die vorbestimmte Konfiguration nur solche Anfrageelemente der ersten Anfragenachricht zur Verschlüsselung vorsieht, die keinen Einfluss auf die Funktionalität der Anfrage auf dem Server haben.

3. Verfahren nach einem der vorhergehenden Ansprüche, wobei die Schlüsselinformation Angaben zu Verschlüsselungsart, Verschlüsselungsalgorithmus, und Schlüsselname oder -Schlüsselnamensmuster umfasst.

4. Verfahren nach einem der vorhergehenden Ansprüche, wobei das Bestimmen von Schlüsselinformation zum Verschlüsseln und Entschlüsseln von dem jeweiligen zu verschlüsselnde bzw. zu entschlüsselnden Anfrageelement einer Anfragenachricht bzw. Antwortelement einer Antwortnachricht abhängt.

5. Verfahren nach Anspruch 1, wobei die Verschlüsselungsinformation und entsprechende Entschlüsselungsinformation unterschiedlich für unterschiedliche Ressourcen sind und für jede Ressource ein korrespondierendes Schlüsselmanifest verwaltet wird.

6. Verfahren nach Anspruch 5, wobei ein Schlüsselmanifest erzeugt wird, wenn in Folge einer Anfragenachricht eine neue Ressource erstellt wird.

7. Vorrichtung zur verschlüsselten Kommunikation, die einem Representational State Transfer, REST, Schema folgt, zwischen einem Client und einem Server,
wobei die Vorrichtung zwischen dem Client und dem Server angeordnet ist,
wobei die Kommunikation eine erste und zweite Anfragenachricht, die jeweils ein oder mehrere Anfrageelemente beinhalten, und eine erste und zweite Antwortnachricht, die jeweils ein oder mehrere Antwortelemente beinhalten, wobei jede Anfragenachricht und jede Antwortnachricht einer Ressource zugeordnet ist, und wobei das Anfrageelement und das Antwortelement einem Attribut einer Ressource entspricht, umfasst,
umfassend:
Mittel zum Empfangen einer ersten Anfragenachricht von dem Client;
Mittel zum Zergliedern der ersten Anfragenachricht in Anfrageelemente;
Mittel zum Bestimmen, für mindestens ein Anfrageelement der ersten Anfragenachricht, ob das Anfrageelement verschlüsselt werden soll basierend auf einer vorbestimmten Konfiguration;
Mittel zum Bestimmen, für jedes Anfrageelement das verschlüsselt werden soll, von Schlüsselinformation zur Verschlüsselung basierend auf der vorbestimmten Konfiguration, und zum Verschlüsseln des Anfrageelements in ein verschlüsseltes Anfrageelement basierend auf der Schlüsselinformation zur Verschlüsselung, und zum Aktualisieren und zum Speichern der Verschlüsselungsinformation in einem Schlüsselmanifest;
Mittel zum Zusammensetzen einer zweiten Anfragenachricht aus den Anfrageelementen der ersten Anfragenachricht, wobei jedes Anfrageelement, das verschlüsselt werden soll, durch das entsprechende verschlüsselte Anfrageelement ersetzt wird;
Mittel zum Senden der zweiten Anfragenachricht an den Server;
Mittel zum Empfangen einer ersten Antwortnachricht von dem Server;
Mittel zum Zergliedern der ersten Antwortnachricht in Antwortelemente;
Mittel zum Bestimmen, für jedes Antwortelement der ersten Antwortnachricht, ob das Antwortelement entschlüsselt werden muss basierend auf der vorbestimmten Konfiguration;
Mittel zum Bestimmen, für jedes Antwortelement das entschlüsselt werden muss, von Schlüsselinformation zum Entschlüsseln aus dem Schlüsselmanifest, und zum Entschlüsseln des Antwortelements basierend auf der Schlüsselinformation zum Entschlüsseln;
Mittel zum Zusammensetzen einer zweiten Antwortnachricht aus den Antwortelementen der ersten Antwortnachricht, wobei jedes Antwortelement, das entschlüsselt werden muss, durch das entsprechende entschlüsselte Antwortelement ersetzt wird; und
Mittel zum Senden der zweiten Antwortnachricht an den Client.

8. Vorrichtung zur Verschlüsselung von Kommunikation nach Anspruch 7, ferner dazu eingerichtet, das Verfahrens zur verschlüsselten Kommunikation zwischen einem Client und einem Server gemäß einem der Ansprüche 2 bis 6 auszuführen.

9. Vorrichtung zur Verschlüsselung von Kommunikation nach einem der Ansprüche 7 oder 8, wobei die Vorrichtung als Proxy ausgelegt ist,
wobei sämtliche Kommunikation zwischen dem Client und dem Server über den Proxy stattfindet, und
wobei der Proxy mit dem Client in einem sicheren Netzwerk verbunden ist.

10. Computerprogramm aufweisend Computerprogrammcode, der wenn er auf einem Computer ausgeführt wird, diesen in die Lage versetzt, ein Verfahren nach einem der Ansprüche 1 bis 6 auszuführen.

## Claims

1. A method for encrypted communication following a Representational State Transfer, REST, scheme, between a client and a server, wherein the communication comprises first and second request messages each including one or more request elements, and first and second response messages each including one or more response elements, wherein each request message and each response message is associated with a resource, and wherein the request element and the response element corresponds to an attribute of a resource, comprising the following steps:
receiving (304) a first request message (301) from the client;
decomposing (305) the first request message (301) into request elements; for at least one request element of the first request message (301), determining whether the request element should be encrypted based on a predetermined configuration (302); for each request element to be encrypted, determining (306) key information for encryption based on the predetermined configuration (302), encrypting (307b) the request element into an encrypted request element based on the key information for encryption, updating and storing (308) the encryption information in a key manifest;
assembling a second request message from the request elements of the first request message, wherein each request element to be encrypted is replaced by the corresponding encrypted request element;
sending (309) the second request message to the server;
receiving (310b) a first response message from the server;
decomposing (311) the first response message into response elements; for each response element of the first response message, determining (312) whether the response element needs to be decrypted based on the predetermined configuration (302); for each response element that needs to be decrypted, determining key information for decrypting from the key manifest, and decrypting (313) the response element based on the key information for decrypting;
assembling a second response message from the response elements of the first response message, wherein each response element that needs to be decrypted is replaced by the corresponding decrypted response element; and
sending (315) the second response message to the client;
**characterized in that** the client is allowed to decrypt the second response message by sending the decrypted response element to the client.

2. The method according to claim 1, wherein the predetermined configuration provides only those request elements of the first request message for encryption, which have no influence on the functionality of the request on the server.

3. The method according to any one of the preceding claims, wherein the key information comprises indications of encryption type, encryption algorithm, and key name or key name pattern.

4. The method according to any one of the preceding claims, wherein the determination of key information for encrypting and decrypting depends on the respective request element of a request message or response element of a response message to be encrypted or decrypted.

5. The method according to claim 1, wherein the encryption information and corresponding decryption information are different for different resources and a corresponding key manifest is maintained for each resource.

6. The method according to claim 5, wherein a key manifest is generated when a new resource is created in response to a request message.

7. An apparatus for encrypted communication, following a Representational State Transfer, REST, scheme, between a client and a server, the apparatus being disposed between the client and the server, the communication comprising first and second request messages each including one or more request elements, and first and second response messages each including one or more response elements, each request message and each response message being associated with a resource, and the request element and the response element corresponding to an attribute of a resource, comprising:
means for receiving a first request message from the client;
means for decomposing the first request message into request elements;
means for determining, for at least one request element of the first request message, whether the request element should be encrypted based on a predetermined configuration;
means for determining, for each request element to be encrypted, key information for encryption based on the predetermined configuration, and for encrypting the request element into an encrypted request element based on the key information for encryption, and for updating and storing the encryption information in a key manifest;
means for assembling a second request message from the request elements of the first request message, wherein each request element to be encrypted is replaced by the corresponding encrypted request element;
means for sending the second request message to the server;
means for receiving a first response message from the server;
means for decomposing the first response message into response elements;
means for determining, for each response element of the first response message, whether the response element needs to be decrypted based on the predetermined configuration;
means for determining, for each response element which must be decrypted, key information for decrypting from the key manifest, and for decrypting the response element based on the key information for decrypting;
means for assembling a second response message from the response elements of the first response message, each response element to be decrypted being replaced by the corresponding decrypted response element; and
means for decrypting the second response message based on the key information for decrypting.
means for sending the second response message to the client.

8. The apparatus for encrypting communication according to claim 7, further adapted to perform the method for encrypted communication between a client and a server according to any one of claims 2 to 6.

9. The apparatus for encrypting communication according to one of claims 7 or 8, wherein the apparatus is designed as a proxy, wherein all communication between the client and the server takes place via the proxy, and wherein the proxy is connected to the client in a secure network.

10. A computer program comprising computer program code which, when executed on a computer, enables the computer to perform a method according to any one of claims 1 to 6.

## Revendications

1. Procédé de communication cryptée, qui suit une architecture REST (Representational State Transfer), entre un client et un serveur,
dans lequel la communication comprend un premier message et un deuxième message de requête, qui renferment respectivement un ou plusieurs éléments de requête, et un premier et un deuxième message de réponse, qui renferment respectivement un ou plusieurs éléments de réponse, dans lequel chaque message de requête et chaque message de réponse est associé à une ressource, et dans lequel l'élément de requête et l'élément de réponse correspond à un attribut d'une ressource,
comprenant les étapes suivantes :
réception (304) d'un premier message de requête (301) du client ;
division (305) du premier message de requête (301) en éléments de requête ;
pour au moins un élément de requête du premier message de requête (301), détermination si l'élément de requête doit être crypté sur la base d'une configuration (302) prédéterminée ;
pour chaque élément de requête qui doit être crypté, détermination (306) d'une information de clé pour le cryptage sur la base de la configuration (302) prédéterminée, cryptage (307b) de l'élément de requête en un élément de requête crypté sur la base de l'information de clé pour le cryptage, mise à jour et mémorisation (308) de l'information de cryptage dans un manifeste de clé ;
composition d'un deuxième message de requête à partir des éléments de requête du premier message de requête, dans lequel chaque élément de requête qui doit être crypté est remplacé par l'élément de requête crypté correspondant ;
envoi (309) du deuxième message de requête au serveur ;
réception (310b) d'un premier message de réponse du serveur ;
division (311) du premier message de réponse en éléments de réponse ;
pour chaque élément de réponse du premier message de réponse, détermination (312) si l'élément de réponse doit être décrypté sur la base de la configuration (302) prédéterminée ;
pour chaque élément de réponse qui doit être décrypté, détermination d'une information de clé pour le décryptage à partir du manifeste de clé, et décryptage (313) de l'élément de réponse sur la base de l'information de clé pour le décryptage ;
composition d'un deuxième message de réponse à partir des éléments de réponse du premier message de réponse, dans lequel chaque élément de réponse qui doit être décrypté est remplacé par l'élément de réponse décrypté correspondant ; et
envoi (315) du deuxième message de réponse au client.

2. Procédé selon la revendication 1, dans lequel la configuration prédéterminée prévoit seulement des éléments de requête du premier message de requête aux fins du cryptage, qui n'ont aucune incidence sur la fonctionnalité de la requête sur le serveur.

3. Procédé selon l'une quelconque des revendications précédentes, dans lequel l'information de clé comprend des indications concernant le type de cryptage, l'algorithme de cryptage et le nom de clé ou le modèle de nom de clé.

4. Procédé selon l'une quelconque des revendications précédentes, dans lequel la détermination de l'information de clé pour le cryptage et décryptage dépend de l'élément de requête respectif à crypter ou à décrypter d'un message de requête ou d'un élément de réponse d'un message de réponse.

5. Procédé selon la revendication 1, dans lequel l'information de cryptage et l'information de décryptage correspondante sont différentes pour différentes ressources et un manifeste de clé correspondant est administré pour chaque ressource.

6. Procédé selon la revendication 5, dans lequel un manifeste de clé est généré quand une nouvelle ressource est créée suite à un message de requête.

7. Dispositif de communication cryptée, qui suit une architecture REST (Representational State Transfert), entre un client et un serveur,
dans lequel le dispositif est disposé entre le client et le serveur,
dans lequel la communication comprend un premier message et un deuxième message de requête, qui renferment respectivement un ou plusieurs éléments de requête, et un premier et un deuxième message de réponse, qui renferment respectivement un ou plusieurs éléments de réponse, dans lequel chaque message de requête et chaque message de réponse est associé à une ressource, et dans lequel l'élément de requête et l'élément de réponse correspond à un attribut d'une ressource,
comprenant :
des moyens de réception d'un premier message de requête du client ;
des moyens de division du premier message de requête en éléments de requête ;
des moyens de détermination, pour au moins un élément de requête du premier message de requête, si l'élément de requête doit être crypté sur la base d'une configuration prédéterminée ;
des moyens de détermination, pour chaque élément de requête qui doit être crypté, d'une information de clé pour le cryptage sur la base de la configuration prédéterminée, et de cryptage de l'élément de requête en un élément de requête crypté sur la base de l'information de clé pour le cryptage, et de mise à jour et de mémorisation de l'information de cryptage dans un manifeste de clé ;
des moyens de composition d'un deuxième message de requête à partir des éléments de requête du premier message de requête, dans lequel chaque élément de requête qui doit être crypté est remplacé par l'élément de requête crypté correspondant ;
des moyens d'envoi du deuxième message de requête au serveur ;
des moyens de réception d'un premier message de réponse du serveur ;
des moyens de division du premier message de réponse en éléments de réponse ;
des moyens de détermination, pour chaque élément de réponse du premier message de réponse, si l'élément de réponse doit être décrypté sur la base de la configuration prédéterminée ;
des moyens de détermination, pour chaque élément de réponse qui doit être décrypté, d'une information de clé pour le décryptage à partir du manifeste de clé, et de décryptage de l'élément de réponse sur la base de l'information clé pour le décryptage ;
des moyens de composition d'un deuxième message de réponse à partir des éléments de réponse du premier message de réponse, dans lequel chaque élément de réponse qui doit être décrypté est remplacé par l'élément de réponse décrypté correspondant ; et
des moyens d'envoi du deuxième message de réponse au client.

8. Dispositif de cryptage de communication selon la revendication 7, configuré en outre pour exécuter le procédé de communication cryptée entre un client et un serveur selon l'une quelconque des revendications 2 à 6.

9. Dispositif de cryptage de communication selon l'une des revendications 7 ou 8, dans lequel le dispositif est conçu en tant que proxy,
dans lequel toute la communication entre le client et le serveur a lieu par l'intermédiaire du proxy, et
dans lequel le proxy est relié au client dans un réseau sécurisé.

10. Programme informatique présentant un code de programme informatique qui, lorsqu'il est exécuté sur un ordinateur, rend celui-ci en mesure d'exécuter un procédé selon l'une quelconque des revendications 1 à 6.
